# EUROPÄISCHE PATENTANMELDUNG

(11) **EP 3 869 138 A1**
(43) Veröffentlichungstag der Anmeldung: **25.08.2021**
(21) Anmeldenummer: 21158111.1
(22) Anmeldetag: 19.02.2021
(51) Int. Cl.: F28D 20/00

(54) **PLATTE ZUR ABGABE UND/ODER AUFNAHME VON WÄRME AN EIN ODER VON EINEM DIE PLATTE UMGEBENDEN MEDIUM, THERMISCHE BATTERIE SOWIE GEBÄUDEVERKLEIDUNGSELEMENT**

(30) Priorität: 21.02.2020 DE 102020104685
(71) Anmelder: Gaukel, Christoph, 61169 Friedberg (DE)
(72) Erfinder: Gaukel, Christoph, 61169 Friedberg (DE)
(74) Vertreter: Manitz Finsterwald Patent- und Rechtsanwaltspartnerschaft mbB

(57) **Zusammenfassung**

Die Erfindung betrifft eine Platte zur Kühlung und/oder Erwärmung eines Umgebungsraumes oder zur Emission oder Absorption von Strahlungsenergie, wobei die Platte einen plattenförmigen Körper und einen sich entlang eines Umfangs des plattenförmigen Körpers erstreckenden Rahmen aufweist. Der plattenförmige Körper weist eine erste Vielzahl von einzelnen und voneinander beabstandeten Fluidströmungskanälen auf, welche sich zwischen zwei Rahmenabschnitten des Rahmens erstrecken, wobei zumindest die zwei Rahmenabschnitte des Rahmens hohl ausgebildet sind und jeweils zumindest bereichsweise einen Zufluss- und/oder einen Abflusskanal für ein die Fluidströmungskanäle durchströmendes erstes Fluid bilden. Des Weiteren betrifft die Erfindung ein Plattensystem umfassend eine Mehrzahl von erfindungsgemäßen Platten sowie eine thermische Batterie mit einem Stapel von aneinander angeordneten erfindungsgemäßen Platten zum Bilden eines Heiz- und/oder Kühlblocks für eine Belüftungsanlage oder eines Pufferspeichers für einen Wärme- oder Kältekreislauf. Weiterhin betrifft die Erfindung ein Gebäudeverkleidungselement, welches zumindest eine erfindungsgemäße Platte aufweist. Die zumindest eine Platte kann zumindest bereichsweise durch ein Verkleidungsteil kaschiert sein.

## Beschreibung

Die vorliegende Erfindung betrifft eine Platte zur Abgabe und/oder Aufnahme von Wärme an ein oder von einem die Platte umgebenden Medium und/oder zur Absorption und/oder Emission von elektromagnetischer Strahlung, wobei die Platte einen plattenförmigen Körper und einen sich entlang eines Umfangs oder eines Teilumfangs des plattenförmigen Körpers erstreckenden Rahmen umfasst. Die Erfindung betrifft ferner ein Plattensystem umfassend eine Mehrzahl von erfindungsgemäßen Platten. Weiterhin betrifft die Erfindung eine thermische Batterie mit einem Stapel von aneinander angeordneten erfindungsgemäßen Platten zum Bilden eines Heiz- und/oder Kühlblocks für eine Belüftungsanlage. Ferner betrifft die vorliegende Erfindung ein Gebäudeverkleidungselement mit zumindest einer erfindungsgemäßen Platte.

Um Gebäude energieeffizient oder energiesparend zu gestalten, wird bestrebt, einen Energiebedarf, insbesondere für die Klimatisierung und Beheizung von Gebäuden, so stark wie möglich zu reduzieren. Hierzu kommt auch der Einsatz von regenerativen Energien in Betracht, die eine mindere Qualität aufweisen, weil sie unregelmäßig verfügbar sind oder weil ihr Temperaturniveau für Heizzwecke relativ niedrig bzw. für Kühlzwecke relativ hoch ist. Aufgrund der unregelmäßigen Verfügbarkeit werden Baumaterialen für beispielsweise Wandkonstruktionen verwendet, welche eine Wärmespeicherung durch ein integriertes Latentwärmespeichermaterial erreichen. Ein derartiges Baumaterial ist beispielsweise in der DE 198 51 710 A1 beschrieben. Weiterhin ist aus der AU 2017201791 A1 ein transportables PCM-Modul (Phasenwechselmaterial-Modul) bekannt, welches eine Vielzahl von PCM-Stapel und ein Gehäuse zum thermischen Isolieren der Vielzahl von PCM-Stapel von einem umgebenden Medium des Moduls umfasst. Die PCM-Stapel sind durch Räume voneinander getrennt, welche einen oder mehrere Kanäle für die Strömung eines Fluids bilden.

Der Erfindung liegt die Aufgabe zugrunde, eine Platte zu schaffen, welche eine möglichst effiziente Kühlung und/oder Erwärmung eines die Platte umgebenden Raumes mit unregelmäßig verfügbaren Kälte- und Wärmequellen bei geringen Temperaturdifferenzen bereitstellt. Der Erfindung liegt weiterhin die Aufgabe zugrunde, eine thermische Batterie für eine Belüftungsanlange und ein Gebäudeverkleidungselement zu schaffen, welche jeweils ebenfalls eine möglichst effiziente Kühlung und/oder Erwärmung einer Umgebung bzw. eines Raumes bereitstellen.

Diese Aufgabe wird durch die Gegenstände der unabhängigen Patentansprüche gelöst. Vorteilhafte Weiterbildungen der Erfindung sind durch die abhängigen Patentansprüche, die nachfolgende Beschreibung und die Figuren offenbart.

Die erfindungsgemäße Platte zur Abgabe und/oder Aufnahme von Wärme an ein oder von einem die Platte umgebenden Medium und/oder zur Absorption und/oder Emission von elektromagnetischer Strahlung weist einen plattenförmigen Körper und einen sich entlang eines plattenförmigen Körpers erstreckenden Rahmen auf. Mit anderen Worten weist die Platte einen flachen Körper auf, welcher in dem Rahmen eingefasst ist. Der plattenförmige Körper weist eine erste Vielzahl von einzelnen und voneinander beabstandeten Fluidströmungskanälen auf, welche sich zwischen zwei Rahmenabschnitten des Rahmens erstrecken. Zumindest diese beiden Rahmenabschnitte sind hohl ausgebildet und bilden jeweils zumindest bereichsweise einen Zufluss- und/oder einen Abflusskanal für ein die Fluidströmungskanäle durchströmendes erstes Fluid. Die Fluidströmungskanäle der Platte weisen zusammen eine innere Fläche auf, welche ein Vielfaches einer äußeren Gesamtfläche des plattenförmigen Körpers beträgt.

Die Fluidströmungskanäle können insbesondere parallel zueinander jeweils von dem Zuflusskanal zu dem Abflusskanal verlaufen. So besteht kein direkter Zufluss oder Abfluss zwischen den einzelnen Fluidströmungskanälen untereinander. Durch die vielen einzelnen Fluidströmungskanäle wird in vorteilhafter Weise eine große Kontaktfläche zwischen dem ersten Fluid und der Platte, bereitgestellt. Das Fluid kann beispielsweise Wasser oder ein Luftgemisch umfassen. Die von dem Fluid durchströmte Platte kann je nach den thermischen Eigenschaften der Platte eine besonders effektive Wärmeübertragung an den Umgebungsraum bereitstellen und damit den Raum besonders effektiv erwärmen oder kühlen. Hierzu kann die Platte beispielsweise aus einem gut wärmeleitenden Kunststoff und/oder aus einem Metall gebildet sein. Die Platte gibt somit die Wärme oder die Kälte des durchströmenden Fluids senkrecht zu einer Plattenebene an den Umgebungsraum ab.

Durch die Ausbildung des Zufluss- und des Abflusskanals innerhalb der hohlen Rahmenabschnitte des Rahmens der Platte wird somit auch eine besonders kompakte Platte bereitgestellt, welche in vorteilhafter Weise mit mehreren Platten ohne Raumverlust angeordnet werden kann. Somit kann beispielsweise eine Wand und/oder eine Decke und/oder ein Boden eines Gebäudes möglichst flächendeckend durch eine Vielzahl von den erfindungsgemäßen Platten verkleidet werden. Des Weiteren bietet die erfindungsgemäße Platte den Vorteil, dass nur der plattenförmige Körper gegen den Rahmen druckdicht zu verbinden ist. Undichtigkeiten zwischen den einzelnen Fluidströmungskanälen können dabei entstehen, verringern jedoch nicht die Wärmeleitfähigkeit der Platte oder die Wärmeübertragung zwischen Fluid und Platte.

Gemäß einer Ausführungsform erstrecken sich die Fluidströmungskanäle in einer Querrichtung oder in einer Längsrichtung des plattenförmigen Körpers zwischen zwei sich gegenüberliegenden Rahmenabschnitten. Die Platte kann dabei bevorzugt rechteckig ausgebildet sein, wobei eine Länge einer Längsseite der Platte mindestens das Doppelte, bevorzugt mindestens das Vierfache, insbesondere bevorzugt mindestens das Sechsfache einer Länge einer Querseite der Platte beträgt. Erstrecken sich die Fluidströmungskanäle in der Querrichtung zwischen den zwei Längsseiten der Platte, wird durch die Vielzahl der vergleichsweise kurzen Fluidströmungskanäle bei geringem Strömungswiderstand eine besonders große Kontaktfläche zwischen Fluid und Platte geschaffen. Des Weiteren strömt durch jeden einzelnen Fluidströmungskanal relativ wenig Fluid über eine relativ kurze Strecke, sodass die einzelnen Fluidströmungskanäle der Platte besonders kleine Querschnitte aufweisen können. Hierdurch ergibt sich der Vorteil, dass eine besonders große Kontaktfläche innerhalb einer Platte besteht, sodass eine besonders effektive Wärmeübertragung zwischen Fluid und Platte ermöglicht wird. Beispielsweise weist ein Querschnitt der einzelnen Fluidströmungskanäle einen Durchmesser von weniger als 1 mm, bevorzugt von weniger als 0,5 mm, insbesondere bevorzugt von weniger als 0,3 mm auf. Somit wird insgesamt eine vergleichsweise hohe Güte der wärmetauschenden Platte bei vergleichsweise niedriger Pumpleistung erreicht.

Bevorzugt sind die Fluidströmungskanäle im Querschnitt rechteckig und/oder spaltförmig und/oder kreisförmig. Insbesondere sind die Fluidströmungskanäle im Querschnitt rechteckig ausgebildet. Dabei können in einem vorbestimmten Abschnitt des plattenförmigen Körpers die Fluidströmungskanäle einen größeren Anteil des Plattenquerschnitts einnehmen, wenn sie im Querschnitt rechteckig mit einer bestimmten diagonalen Länge ausgebildet sind als wenn die Fluidströmungskanäle im Querschnitt kreisförmig mit einem der Diagonalen entsprechendem Durchmesser ausgebildet sind. Somit kann zugleich eine besonders hohe Wärmeleitfähigkeit der Platte und eine besonders große Kontaktfläche erzielt werden.

Gemäß einer weiteren Ausführungsform ist zumindest eine gesamte Seite des Rahmens umfassend einen der beiden Rahmenabschnitte hohl ausgebildet und bildet den Zufluss- und/oder den Abflusskanal. Mit anderen Worten ist der Rahmen über eine gesamte Länge einer Querseite oder einer Längsseite hohl ausgebildet. Insbesondere kann der gesamte Rahmen in seinem gesamten Umfang hohl ausgebildet sein. Weiterhin bevorzugt ist eine Querschnittsfläche eines Zufluss- und/oder eines Abflusskanals größer als eine Querschnittsfläche eines der Fluidströmungskanäle. Eine relative Größe der Querschnittsfläche des Zufluss- und/oder des Abflusskanals zu der Querschnittsfläche eines Fluidströmungskanals kann derart gewählt sein, dass sich in allen Fluidströmungskanälen der Platte gleiche Strömungsverhältnisse ausbilden. Somit erfolgt die Wärmeabgabe bzw. Wärmeaufnahme gleichmäßig über alle Fluidströmungskanäle der Platte.

Bevorzugt ist ein Querschnitt eines Fluidströmungskanals derart gewählt, dass eine gleichmäßige Wärmeabgabe bzw. Wärmeaufnahme trotz unterschiedlicher Reibungsverluste in den Zu- und Abflüssen bzw. trotz einer unterschiedlichen Länge der einzelnen Fluidströmungskanäle erreicht wird. Die unterschiedlichen Reibungsverluste bzw. die unterschiedlichen Längen der Fluidströmungskanäle ergeben sich insbesondere bei nicht rechteckigen Platten oder bei einer Kombination unterschiedlich großer Platten.

Gemäß einer weiteren Ausführungsform ist der jeweilige Rahmenabschnitt, welcher den Zufluss- und/oder den Abflusskanal bereitstellt, an einen Zufluss zum Zuführen des ersten Fluids oder an einen Abfluss zum Abführen des ersten Fluids angeschlossen. Dabei können der Zufluss und/oder der Abfluss an einer Längsseite oder an einer Querseite des Rahmens angeordnet sein. Beispielsweise bilden die beiden Längsseiten des Rahmens den Zufluss- und den Abflusskanal. Die beiden Anschlüsse für den Abfluss und den Zufluss können dann an den Querseiten des Rahmens angeordnet sein. So können die Platten an ihrer Längsseite aneinander montiert werden, ohne dass Zwischenräume für die Anschlüsse vorgesehen werden müssen. Die beiden Anschlüsse können in dieser Konfiguration aber auch an den Längsseiten angeordnet sein.

Gemäß einer weiteren Ausführungsform weist der plattenförmige Körper zumindest eine Schicht mit einem Phasenwechselmaterial auf. Die Fluidströmungskanäle sind dabei in einem thermischen Kontakt mit dem Phasenwechselmaterial. Bevorzugt umfasst die Platte zumindest zwei parallel zueinander angeordnete Schichten mit dem Phasenwechselmaterial. Die Fluidströmungskanäle erstrecken sich in einer Ebene zwischen den zumindest zwei Schichten. Das Phasenwechselmaterial stellt ein Speichermedium bereit, welches Wärme von dem Fluid aufnehmen bzw. an das Fluid abgeben kann. Somit kann die Platte zum Heizen als auch zum Kühlen genutzt werden. Hierfür weist das Phasenwechselmaterial eine geringe Hysterese auf. Mit anderen Worten liegen die Phasenwechsel Schmelzen und Erstarren des Phasenwechselmaterials in einem sehr engen Temperaturbereich. Vorzugsweise ist das Phasenwechselmaterial gut Wärme leitend, schwer entflammbar und nicht brennbar. Beispielsweise umfasst das Phasenwechselmaterial expandierten Graphit.

Gemäß einer weiteren Ausführungsform sind die einzelnen Fluidströmungskanäle mittels eines wärmeleitenden Blechs oder mittels einer wärmeleitenden Folie voneinander beabstandet. Insbesondere ist das Blech oder die Folie aus einem Metall gebildet. Durch das wärmeleitende Blech oder durch die wärmeleitende Folie wird einerseits eine Kontaktfläche zu dem durchströmenden Fluid der Fluidströmungskanäle vergrößert und andererseits eine ausreichende Wärmeleitfähigkeit senkrecht zur Plattenebene gewährleistet.

Gemäß einer weiteren Ausführungsform weist der plattenförmige Körper eine zweite Vielzahl von einzelnen und voneinander beabstandeten Fluidströmungskanälen auf, welche dazu ausgelegt sind, von einem zweiten Fluid durchströmt zu werden. Die relative Anordnung der zweiten Vielzahl von Fluidströmungskanälen zu der ersten Vielzahl von Fluidströmungskanälen ist dergestalt, dass eine Strömungsrichtung des zweiten Fluids parallel oder senkrecht zu einer Strömungsrichtung des ersten Fluids ist, wenn die Fluidströmungskanäle durch die jeweiligen Fluide durchströmt werden. Das zweite Fluid unterscheidet sich von dem ersten Fluid. Bevorzugt ist eines der beiden Fluide flüssig und das andere Fluid gasförmig. Beispielsweise ist eines der beiden Fluide Wasser und das andere Fluid ein Luftgemisch. Hierzu ist eine Querschnittsfläche derjenigen Fluidströmungskanäle, die für ein Durchströmen durch das Luftgemisch ausgelegt sind, größer als eine Durchschnittsfläche derjenigen Fluidströmungskanäle, die für ein Durchströmen durch Wasser ausgelegt sind. Durch die für zwei unterschiedliche Fluide ausgelegte Fluidströmungskanäle kann in vorteilhafter Weise Wärme zeitversetzt von den Fluiden an die Umgebung oder an das Phasenwechselmaterial abgegeben werden bzw. Wärme zeitversetzt von der Umgebung oder von dem Phasenwechselmaterial aufgenommen werden. Eine Wärmeübertragung oder eine Wärmeaufnahme der beiden unterschiedlichen Fluide kann gleichzeitig oder zeitlich alternierend erfolgen. Es kann aber auch das erste Fluid für die Abgabe von Wärme vorgesehen sein, während das zweite Fluid für die Aufnahme von Wärme vorgesehen ist.

Gemäß einer weiteren Ausführungsform weisen die Fluidströmungskanäle zur Kompensation von Reibungsverlusten und/oder Druckunterschieden in einem Querschnitt voneinander unterschiedliche Dimensionen auf. Dabei können Dimensionen bzw. Maße der Fluidströmungskanäle derart gezielt angepasst werden, dass Reibungsverluste in den Versorgungskanälen und/oder in den Anschlusskanälen und/oder im Zuflusskanal und im Abflusskanal kompensiert werden. Zusätzlich oder alternativ können dazu Druckunterschiede durch ab- oder zunehmende Strömungsgeschwindigkeiten in den Versorgungskanälen und/oder im Zuflusskanal und im Abflusskanal kompensiert werden. Weiterhin können eine unterschiedliche Länge der Fluidströmungskanäle und/oder unterschiedliche Größen oder Formen der Platten und/oder unterschiedlich dicke Schichten an Speichermaterial mit den unterschiedlichen Dimensionen der Fluidströmungskanäle ausgeglichen werden.

Gemäß einer weiteren Ausführungsform ist die Platte zu einem zylinderförmigen Körper geformt. Hierzu kann die Platte eine Elastizität aufweisen, die es ermöglicht, die Platte zu einem Zylinder zu verbiegen bzw. zu verformen. Die Platte ist zudem derart geformt, dass der Zuflusskanal und der Abflusskanal der Platte in einem durch den zylinderförmigen Körper gebildeten Innenraum angeordnet sind. Weist die Platte zusätzlich Versorgungskanäle zur Versorgung zumindest einer weiteren Platte auf, so kann die Platte ferner Anschlusskanäle aufweisen, die von den Versorgungskanälen zu den jeweiligen Anschlüssen der Platte führen. Hierbei können der Versorgungstunnel und/oder die Versorgungskanäle und/oder die Anschlusskanäle auch in dem durch den zylinderförmigen Körper gebildeten Innenraum angeordnet sein. Die zylinderförmige Platte kann beispielsweise zur Ausfüllung von Bohrlöchern ausgebildet sein oder in Pfähle von Pfahlgründungen integriert werden. Somit kann eine besonders gute Wärmeübertragung zwischen dem durch die Platte strömenden Fluid und dem die Platte umgebenden Material bereitgestellt werden.

Die Platte kann ferner in zumindest zwei Segmenten und/oder in einer geraden Anzahl von Segmenten mit Fluidströmungskanälen unterteilt sein. Beispielsweise sind in einem Querschnitt der zylinderförmigen Platte zwei Kreissegmente von jeweils 180° Fluidströmungskanäle. Ein gemeinsamer Zuflusskanal versorgt die beiden Kreissegmente mit dem Fluid. Die zylinderförmige Platte kann aber auch im Querschnitt vier Segmente mit je 90° oder sechs Segmente mit je 60° oder acht Segmente mit je 45° aufweisen usw.

Die Erfindung betrifft ferner ein Plattensystem umfassend eine Mehrzahl von erfindungsgemäßen Platten, welche gemeinsam den zylinderförmigen Körper bilden. Die Mehrzahl der Platten sind über gemeinsame Zuflusskanäle und über gemeinsame Abflusskanäle miteinander verbunden. Mit anderen Worten bilden die jeweiligen Zuflusskanäle und die jeweiligen Abflusskanäle der Platten gemeinsame Zuflusskanäle bzw.gemeinsame Abflusskanäle. Das Plattensystem kann gemeinsame Versorgungskanäle umfassen, welche in dem durch den zylinderförmigen Körper gebildeten Hohlraum angeordnet sein können. Die gemeinsamen Versorgungskanäle können zur Versorgung weiterer Platten und/oder weiterer Plattensysteme ausgelegt sein.

Das Plattensystem kann beispielsweise erfindungsgemäße Platten umfassen, welche in Serie angeordnet sind. So können die jeweiligen Platten des Plattensystems zylinderförmig sein und zusammen ein zylinderförmiges Plattensystem bilden. Die Querschnitte der jeweiligen Fluidströmungskanäle der Platten können entlang einer Hochrichtung des durch das Plattensystem gebildeten Zylinders zunehmen. Somit können große Druckunterschiede kompensiert werden, die durch Reibungsverluste in den Zuflusskanälen und in den Abflusskanälen auftreten könnten. Ferner können die Zuflusskanäle und die Abflusskanäle sich entlang der Hochrichtung des Zylinders verjüngen.

Die zu der erfindungsgemäßen Platte vorgebrachten Erläuterungen gelten für die erfindungsgemäße thermische Batterie entsprechend, dies gilt insbesondere hinsichtlich Vorteilen und bevorzugten Ausführungsformen.

Die Erfindung betrifft ferner eine thermische Batterie, welche einen Stapel von aneinander angeordneten erfindungsgemäßen Platten aufweist. Die thermische Batterie ist zum Bilden eines Heiz- und/oder Kühlblocks für eine Belüftungsanlage oder als Pufferspeicher eines Wärme- oder Kältekreislaufs ausgebildet. Es können mehrere Batterien mit unterschiedlichen Phasenwechselmaterialien eingesetzt werden. So kann eine Batterie zur Kühlung ausgelegt sein und hierfür ein Phasenwechselmaterial mit einer niedrigeren Schmelztemperatur aufweisen, als eine Batterie, die zum Heizen ausgelegt ist. Die thermischen Batterien können an eine Wärmepumpe und/oder an Solarthermie angeschlossen sein, um mit Wärme gespeist zu werden. Die thermische Batterie kann aber auch zur Kühlung von einer Umgebungsluft durchströmt werden oder andere Wärme- oder Kältequellen nutzen.

Die zu der erfindungsgemäßen Platte vorgebrachten Erläuterungen gelten für die erfindungsgemäße thermische Batterie entsprechend, dies gilt insbesondere hinsichtlich Vorteilen und bevorzugten Ausführungsformen.

Die Erfindung betrifft ferner ein Gebäudeverkleidungselement, welches zumindest eine erfindungsgemäße Platte aufweist. Das Gebäudeverkleidungselement kann ferner ein Verkleidungsteil aufweisen, welches die zumindest eine Platte zumindest bereichsweise kaschiert. Das Verkleidungsteil kann aus einem wärmeleitfähigen Material gebildet sein und/oder kann einen hohen Emissionsgrad aufweisen. Weiterhin kann das Verkleidungsteil von der Platte abnehmbar gebildet sein. Das Gebäudeverkleidungselement ist als eines der folgenden Gebäudeelemente ausgebildet: als ein Deckenprofil zum Montieren an einem Teilbereich einer Kante, welche zwischen einer Decke und einer Wand ausgebildet ist; als ein Deckenelement, insbesondere als eine Abdeckplatte zum Montieren an einer Decke; als ein Wandelement zum Bilden eines Teilbereichs einer Wand; als eine Bodenplatte; als ein Dachelement zum Bilden einer Dacheindeckung; als ein Fassadenelement einer Gebäudefassade; oder als ein Brüstungselement einer Balkonbrüstung. Durch die Verlegung des Gebäudeverkleidungselements innerhalb und/oder außerhalb eines Gebäudes kann großflächig ein Wärmeaustausch zwischen dem Außen- und dem Innenraum des Gebäudes stattfinden, für den das Fluid als Transportmedium dient. Platten mit Phasenwechselmaterial werden im Gebäudeinnern eingesetzt, die Platten im Außenraum können auf der inneren Seite mit einer Isolierung versehen werden, wenn sie an der Außenfläche des Gebäudes angebracht werden.

Ist das Gebäudeverkleidungsteil beispielsweise als ein Deckenprofil ausgebildet, so kann eine Raumdecke umlaufend mit dem Deckenprofil ausgekleidet werden. Eine Kühlung kann beispielsweise dadurch erfolgen, dass unterhalb der Decke stauende warme Luft durch die zumindest eine Platte des Deckenprofils geführt wird. Innerhalb der Platte kühlt die Luft ab und strömt anschließend einer Raumwand entlang nach unten. Hierzu kann beispielsweise die Platte nachts mit Kälte beladen werden. Weiterhin kann die Platte zur Kühlung und/oder Heizung ein Phasenwechselmaterial aufweisen. Beispielsweise beträgt eine Schmelztemperatur des Phasenwechselmaterials 23 °C. Dies entspricht einem Komfortbereich für eine erwünschte Raumtemperatur.

Ist das Gebäudeverkleidungselement beispielsweise als eine Abdeckplatte zum Montieren an der Raumdecke ausgebildet, kann das Verkleidungsteil eine Trockenbau-Platte sein. Die Platte des Gebäudeverkleidungselements kann weiterhin die Funktion einer Füllung einer Decke, beispielsweise einer Holzdecke, übernehmen. Beispielsweise wird zwischen einzelnen Balken einer Holzbalkendecke üblicherweise die Füllung zu Zwecken des Brandschutzes oder der Schalldämmung vorgesehen. Das Gebäudeverkleidungselement kann hierzu durch seine Masse einen Schallschutz leisten und/oder aus schwer entflammbaren Materialien bestehen oder eine eine schwer entflammbare Beschichtung aufweisen. Insgesamt ist die Raumdecke mit der Abdeckplatte optisch nicht von einer üblichen Raumdecke unterscheidbar. Ein Wärmeaustausch kann passiv durch Wärmestrahlung und thermischen Kontakt mit einer massiven Raumdecke sowie durch Kontakt mit der Raumluft erfolgen. Bei einer Kühlung kann das Gebäudeverkleidungselement einen Konvektionsstrom, welcher kühle Luft zu dem Fußboden strömen lässt, erzeugen.

Bevorzugt weist das Gebäudeverkleidungselement weiterhin zumindest einen Ventilator auf. Der Ventilator ist dazu ausgelegt, eine Strömungsgeschwindigkeit des Fluids, insbesondere des gasförmigen Fluids, in einem Zufluss- oder Abflussbereich der Platte oder der Platten zu erhöhen. Mit Zufluss- oder Abflussbereich ist ein Bereich des Gebäudeverkleidungselements gemeint, welcher sich außerhalb der Platte befindet und innerhalb welchen das Fluid, wie beispielsweise das Luftgemisch, der Platte/den Platten zugeführt oder von der Platte/den Platten abgeführt wird. Weiterhin ist der Ventilator dazu ausgelegt, eine Drehzahl des Ventilators in Abhängigkeit von einer Raumtemperatur zu regeln. Beispielsweise kann bei dem Deckenprofil der Ventilator im Abflussbereich der Platte angeordnet sein und die kühle, aus der Platte austretende Luft in Raumrichtung nach unten blasen. Hierzu kann der Ventilator ebenfalls durch das Verkleidungsteil zumindest teilweise kaschiert sein. Der Ventilator verstärkt in vorteilhafter Weise eine Konvektionsströmung, welche durch einen Temperaturunterschied der zu der Platte zugeführten Luft und der aus der Platte austretenden Luft entsteht. Eine Stärke der Konvektionsströmung kann durch die Regelung der Drehzahl des Ventilators eingestellt werden. So kann eine vorbestimmte Soll-Raumtemperatur vorgegeben sein und eine tatsächliche Ist-Raumtemperatur gemessen werden. Liegt die gemessene Ist-Raumtemperatur über der vorbestimmten Soll-Raumtemperatur, kann vorgesehen sein, dass die Drehzahl des Ventilators erhöht wird. Im umgekehrten Fall wird die Drehzahl des Ventilators reduziert.

Gemäß einer Ausführungsform weist das Gebäudeverkleidungselement zumindest zwei erfindungsgemäße Platten sowie einen gemeinsamen Versorgungstunnel auf. Der gemeinsame Versorgungstunnel kann zur Versorgung der Platten einen Versorgungskanal und/oder Anschlusskanäle aufweisen, die von dem Versorgungstunnel zu einem jeweiligen Anschluss führen. Der gemeinsame Versorgungstunnel ist dazu ausgelegt, das Fluid zu den jeweiligen Anschlüssen für die Zuflüsse und/oder von den jeweiligen Anschlüssen für die Abflüsse hinweg über den Versorgungskanal zuzuführen und/oder abzuführen.

Insbesondere ist der gemeinsame Versorgungstunnel dazu ausgelegt, das Fluid, wie beispielsweise das gasförmige Fluid, zu den jeweiligen Fluideintrittsöffnungen zuzuführen und/oder von den jeweiligen Fluidaustrittsöffnungen abzuführen. Der gemeinsame Versorgungstunnel kann auch dazu ausgelegt sein, zwei verschiedene Fluide, wie beispielsweise das Luftgemisch und Wasser, zu den jeweiligen Anschlüssen der Platten hinweg zuzuführen und/oder abzuführen. Weiterhin kann der gemeinsame Versorgungstunnel mittels eines Entkopplungsmaterials von den zumindest zwei Platten beabstandet angeordnet sein. Das Entkopplungsmaterial kann ein schalldämpfendes und/oder ein schallabsorbierendes Material sein. Weiterhin kann das Entkopplungsmaterial eine dichtende Eigenschaft aufweisen, also den Versorgungstunnel abdichten.

Bevorzugt sind die Versorgungskanäle und/oder die Anschlusskanäle gerade oder bogenförmig oder U-förmig oder schlangenförmig geformt. Durch die dadurch entstehenden unterschiedlich langen Wege, die das jeweilige Fluid durch die jeweiligen Anschlusskanäle zurücklegen muss, können Reibungseffekte kompensiert werden. Des Weiteren kann eine Gesamtlänge eines jeweiligen Anschlusskanals in Abhängigkeit von einer Position in Strömungsrichtung des Fluids im Versorgungskanal immer kürzer ausgebildet sein. Dies ergibt den Vorteil, dass alle Platten, die über einen gemeinsamen Versorgungskanal mit dem Fluid versorgt werden, gleichmäßig durchströmt werden.

Bevorzugt wird der gemeinsame Versorgungstunnel von einem Luftgemisch durchströmt. Weiterhin kann der gemeinsame Versorgungstunnel in zwei Segmente derart unterteilt sein, dass der zumindest einen Platte des ersten Segments Frischluft zugeführt wird, und dass von dem zumindest eine Platte umfassenden zweiten Segment zumindest teilweise Abluft abgeführt wird. Wird beispielsweise die Frischluft durch die Fluidströmungskanäle einer Platte geführt, bevor sie in den Raum strömt, wird ein Heiz- oder Kühlbeitrag aus der Temperaturdifferenz zwischen der Abluft und der Frischluft gewonnen.

Ist das Gebäudeverkleidungselement beispielsweise als ein Wandelement ausgebildet, kann die Abluft in Bodennähe des Raumes entnommen und die Frischluft im Deckenbereich des Raumes abgegeben werden. In dem Frischluft führenden Segment sind bevorzugt Lüftungsschlitze zum Raum hin abgedeckt, so dass die Frischluft durch die Frischluft führende Platte nach oben und durch einen oberen Lüftungsschlitz in den Raum strömt. In dem weiteren Segment strömt die Luft als Umluft durch die jeweilige Umluft führende Platte. Wenn ein Frischluftbedarf hoch ist, können auch zwei oder mehr Platten das Frischluftsegment bilden. Um im derselben Wandelement Abluft ab- und Frischluft zuzuführen, kann eine Stirnseite des Versorgungstunnels dazu ausgelegt sein, Abluft und Frischluft über die jeweiligen Segmente weg- bzw. zuzuführen. Hierzu kann der Versorgungstunnel in die zwei Segmente geteilt sein.

Gemäß einer weiteren Ausführungsform umfasst das Gebäudeverkleidungselement auf einer Innenfläche eine Isolierungsschicht und/oder auf einer Außenfläche eine Anordnung von Photovoltaikzellen und/oder auf der Außenfläche eine Verglasung oder Isolierverglasung und/oder eine selektive Beschichtung. Die zumindest eine Platte ist weiterhin dazu ausgelegt, zumindest eine der folgenden Funktionen auszuführen: eine Kühlung der Photovoltaikzellen und/oder eine Wärmeaufnahme an der Außenfläche und/oder eine Wärmeabgabe über die Außenfläche an eine Umgebung zur Abführung überschüssiger Wärme und/oder eine Wärmeisolierung eines Gebäudes. Die Wärmeabgabe oder Wärmeaufnahme erfolgt durch Absorption oder Emission von elektromagnetischer Strahlung und/oder durch Kontakt mit der Umgebung und/oder indem ein fluides Umgebungsmediums durch die Fluidströmungskanäle der Platte geleitet wird.

Die zu der erfindungsgemäßen Platte vorgebrachten Erläuterungen gelten für das erfindungsgemäße Gebäudeverkleidungselement entsprechend, dies gilt insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: eine schematische Darstellung einer Querschnittsfläche einer Platte mit einer Vielzahl von Fluidströmungskanälen;
- Fig. 2A: eine schematische Draufsicht einer quer durchströmten Platte mit entlang den Längsseiten der Platte ausgebildeten Zufluss- und Abflusskanälen;
- Fig. 2B: eine schematische Draufsicht einer längs durchströmten Platte mit entlang den Querseiten der Platte ausgebildeten Zufluss- und Abflusskanälen;
- Fig. 2C: eine schematische Draufsicht einer quer durchströmten Platte mit mittig entlang den Längsseiten der Platte angeordneten Anschlüssen;
- Fig. 3: eine schematische Darstellung einer Querschnittsfläche der Platte senkrecht zu einer Tiefenrichtung mit in Querrichtung verlaufenden Fluidströmungskanälen;
- Fig. 4A: eine schematische Darstellung einer weiteren Querschnittsfläche der Platte senkrecht zu einer Längsrichtung mit in Querrichtung verlaufenden Fluidströmungskanälen;
- Fig. 4B: eine schematische Darstellung einer Querschnittsfläche der Platte wie in Fig. 4A in einer weiteren Ausführungsform der Platte;
- Fig. 5: eine schematische Darstellung einer Querschnittsfläche der quer durchströmten Platte senkrecht zu einer Tiefenrichtung mit in Querrichtung verlaufenden Wasserkanälen und mit in Querrichtung verlaufenden Luftkanälen;
- Fig. 6: eine schematische Darstellung einer Querschnittsfläche der Platte senkrecht zu einer Längsrichtung mit in Querrichtung verlaufenden Wasserkanälen und mit in Längsrichtung verlaufenden Luftkanälen;
- Fig. 7: eine schematische Darstellung einer weiteren Querschnittsfläche der Platte wie in Fig. 6 mit einem Wasseranschluss und mit einer Lufteintrittsöffnung;
- Fig. 8: eine schematische Darstellung einer Querschnittsfläche der Platte mit in Querrichtung verlaufenden Wasserkanälen und Luftkanälen und in Längsrichtung verlaufenden Zu- und Abflusskanälen;
- Fig. 9A: eine schematische Darstellung einer Querschnittsfläche der Platte mit in Querrichtung verlaufenden Wasserkanälen und Luftkanälen und mit einem Wasseranschluss und mit einer Lufteintrittsöffnung;
- Fig. 9B: eine schematische Darstellung einer Querschnittsfläche der Platte wie in Fig. 9A und mit zwei Lufteintrittsöffnungen;
- Fig. 10: eine schematische Darstellung einer Querschnittsfläche der Platte wie in Fig. 4B und mit einem Speichermedium;
- Fig. 11: eine schematische Darstellung einer Querschnittsfläche einer weiteren Ausführungsform der Platte aus Fig. 4B mit flacher Oberfläche;
- Fig. 12: eine schematische Darstellung einer Querschnittsfläche der Platte aus Fig. 11 mit einem Speichermedium;
- Fig. 13: eine schematische Darstellung einer Querschnittsfläche der Platte aus Fig. 11 mit einem Isoliermaterial und flachen Zufluss- und Abflusskanälen;
- Fig. 14: eine schematische Darstellung einer Querschnittsfläche der Platte aus Fig. 6, jedoch Fuidströmungskanälen für flüssige Fluide nur oben, mit einem Isoliermaterial und mit einer Isolierverglasung;
- Fig. 15: eine schematische Draufsicht einer quer durchströmten, großformatigen Platte mit mehreren Zufluss- und Abflusskanälen;
- Fig. 16: eine schematische Querschnittsansicht einer zylinderförmigen Platte 10 mit zwei Kreissegmenten mit Fluidströmungskanälen;
- Fig. 17: eine schematische Querschnittsansicht einer zylinderförmigen Platte 10 mit sechs Kreissegmenten mit Fluidströmungskanälen und mit Versorgungskanälen;
- Fig. 18: eine schematische Perspektivansicht einer Serie von zwei zylinderförmigen Platten 10 aus Fig. 16;
- Fig. 19: eine schematische Querschnittsansicht von zylinderförmigen Platten zur Verwendung als Erdsonde;
- Fig. 20: eine schematische Darstellung einer Querschnittsfläche einer thermischen Batterie;
- Fig. 21: eine schematische Darstellung eines Querschnittsfläche eines Deckenprofils mit der Platte aus Fig. 8 und mit einem Speichermedium;
- Fig. 22: eine schematische Darstellung einer Querschnittsfläche von mehreren Abdeckplatten an einer Decke mit den Platten aus Fig. 10;
- Fig. 23A: eine schematische Darstellung einer Querschnittsfläche der Abdeckplatten aus Fig. 22 senkrecht zu deren Tiefenrichtung mit Wasserzuflusskanälen und einem gemeinsamen Versorgungskanal;
- Fig. 23B: eine schematische Darstellung einer Querschnittsfläche der Abdeckplatten wie in Fig. 23A in einer weiteren Ausführungsform;
- Fig. 24A: eine schematische Darstellung einer Querschnittsfläche von mehreren Abdeckplatten zur Bildung einer Holzbalkendecke;
- Fig. 24B: eine schematische Darstellung einer Querschnittsfläche von mehreren Abdeckplatten zur Bildung einer Holzbalkendecke wie in Fig. 24A in einer weiteren Ausführungsform;
- Fig. 25: eine schematische Darstellung einer Querschnittsfläche der Abdeckplatten aus Fig. 24A oder Fig. 24B senkrecht zu deren Tiefenrichtung;
- Fig. 26: eine schematische Darstellung einer Querschnittsfläche von mehreren Platten zur Bildung einer Dacheindeckung;
- Fig. 27: eine schematische Querschnittsansicht der Dacheindeckung mit einem Versorgungstunnel gemäß einer Ausführungsform;
- Fig. 28: eine schematische Querschnittsansicht der Dacheindeckung mit einem Versorgungstunnel gemäß einer weiteren Ausführungsform;
- Fig. 29: eine schematische Darstellung einer Querschnittsfläche einer Raumwand mit vier Platten wie in Fig. 6;
- Fig. 30: einen vergrößerten Ausschnitt einer Verbindungsstelle zwischen den Platten aus Fig. 29;
- Fig. 31: eine schematische Darstellung einer Querschnittsfläche in einem Sockelbereich der Wand aus Fig. 29 mit Luftzufuhrkanälen;
- Fig. 32: eine schematische Darstellung einer Querschnittsfläche n einem Sockelbereich der Wand aus Fig. 29 mit Wasserkanälen;
- Fig. 33: eine schematische Darstellung einer Querschnittsfläche des Sockelbereichs aus Fig. 31 senkrecht zu einer Längsrichtung der Platten;
- Fig. 34: eine schematische Darstellung einer Querschnittsfläche in einem Deckenbereich der Wand aus Fig. 29 mit Luftzufuhrkanälen;
- Fig. 35: eine schematische Darstellung einer Querschnittsfläche des Deckenbereichs aus Fig. 34 senkrecht zu einer Längsrichtung der Platten;
- Fig. 36: eine schematische Darstellung einer Querschnittsfläche in einem Sockelbereich der Wand aus Fig. 29 mit einem gemeinsamen Versorgungstunnel zur Luftabführung;
- Fig. 37: eine schematische Darstellung einer Querschnittsfläche in einem Sockelbereich der Wand wie in Fig. 36 mit einem Frischluftsegment und einem Umluftsegment;
- Fig. 38: eine schematische Darstellung einer Querschnittsfläche in einem Sockelbereich der Wand wie in Fig. 36 mit einem Frischluftsegment und einem Abluftsegment; und
- Fig. 39: eine schematische Darstellung einer Querschnittsfläche in einem Sockelbereich der Wand aus Fig. 29 mit einem Frischluftsegment und einem Abluftsegment.

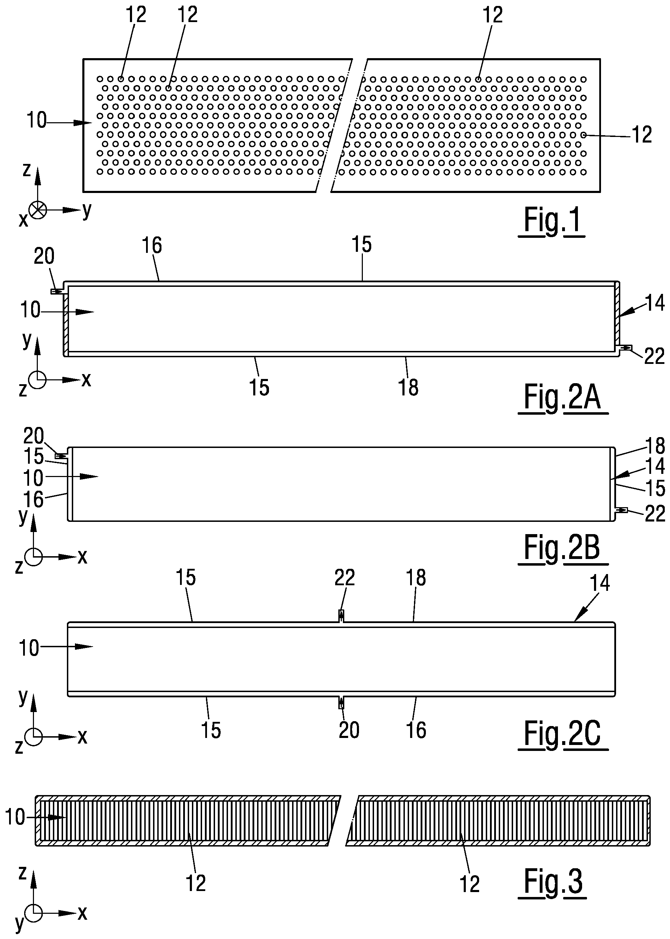

In den Figuren 1 bis 19 sind verschiedene Ausführungsformen einer Platte 10 dargestellt, welche dazu ausgelegt ist, Wärme oder Kälte von einem oder mehreren Fluiden an die Oberflächen der Platte und dann an die Umgebung der Platte zu übertragen oder als Absorber zu dienen und Wärme oder Kälte effektiv von den Oberflächen der Platte an das oder die Fluide zu übertragen. Die Platte 10 ist ausgelegt, den umgebenden Raum zu kühlen und/oder zu erwärmen. Hierzu weist die Platte 10, wie in Fig. 1 in einer Querschnittsansicht dargestellt, eine Vielzahl von einzelnen und voneinander beabstandeten Fluidströmungskanälen 12 auf. Bei den Fluidströmungskanälen 12 handelt es sich um viele kurze und parallele Einzelströme, die beispielsweise von Wasser durchströmt werden. Eine Querschnittsfläche eines Fluidströmungskanals 12 ist relativ zu den Dimensionen der Platte 10 um ein Vielfaches kleiner. Beispielsweise ist die Platte 224 cm lang, 30 cm breit und weist eine Stärke von 1 cm auf. Ein Fluidströmungskanal 12 weist einen Durchmesser von 0,4 mm auf. Insgesamt kann die Platte dann 30.000 Fluidströmungskanäle 12 aufweisen.

Die Fluidströmungskanäle 12 können sich in einer Längsrichtung X oder alternativ in einer Querrichtung Y der Platte erstrecken und unterschiedliche Querschnitte besitzen. In Fig. 3 ist eine Platte gezeigt, deren Fluidströmungskanäle 12 spaltförmig sind. Weiterhin weist die Platte 10 einen Rahmen 14 auf, welche den plattenförmigen Körper der Platte 10 in der Längsrichtung X und in der Querrichtung Y umgibt. Fließt beispielsweise Wasser in der Querrichtung Y durch die Fluidströmungskanäle 12 der Platte 10, so sind, wie in den Figuren 2A und 2C dargestellt, die sich in Längsrichtung X erstreckenden Längsseiten 15 des Rahmens 14 hohl ausgebildet, um einen Zuflusskanal 16 oder einen Abflusskanal 18 für die jeweiligen Fluidströmungskanäle 12 der Platte 10 zu bilden. Alternativ sind, wie in Fig. 2B dargestellt, die sich in Querrichtung Y erstreckenden Querseiten 15 des Rahmens 14 hohl ausgebildet und bilden den Zuflusskanal 16 oder den Abflusskanal 18. Die nichthohlen Rahmenabschnitte des Rahmens 14 können als stabilisierende Rahmenelemente ausgebildet sein und/oder solide ausgebildet sein. Alternativ kann der Rahmen 14 die Platte 10 lediglich teilweise umgeben, wie beispielsweise lediglich die hohlen Rahmenabschnitte 15 aufweisen. Um das jeweilige Fluid bzw. das Wasser zuzuführen bzw. abzuführen, ist der Zuflusskanal 16 an einen Zufluss 20 und der Abflusskanal 18 an einem Abfluss 22 angeschlossen. Der Zufluss 20 und der Abfluss 22 können unabhängig von der Position des Zuflusskanals 16 und des Abflusskanals 18 an den Längsseiten des Rahmens 14 oder an den Querseiten des Rahmens 14 angeordnet sein, wie in den Figuren 2A, 2B und 2C dargestellt. Der Zufluss 20 und der Abfluss 22 können aber auch beide an einer einzigen Rahmenseite des Rahmens 14 angeordnet sein.

Die Platte 10 kann im Querschnitt im Wesentlichen die Form eines Rechtecks aufweisen, wie in den Figuren 2A bis 2C gezeigt. Die Platte 10 kann alternativ trapezförmig sein oder eine weitere geometrische Form aufweisen (hier nicht dargestellt). Die Fluidströmungskanäle 12 können unterschiedliche Längen aufweisen. Der Zuflusskanal 16 und der Abflusskanal 18 können beispielsweise entlang einer Länge oder Breite der Platte 10 sich im Querschnitt verjüngen oder sich erweitern.

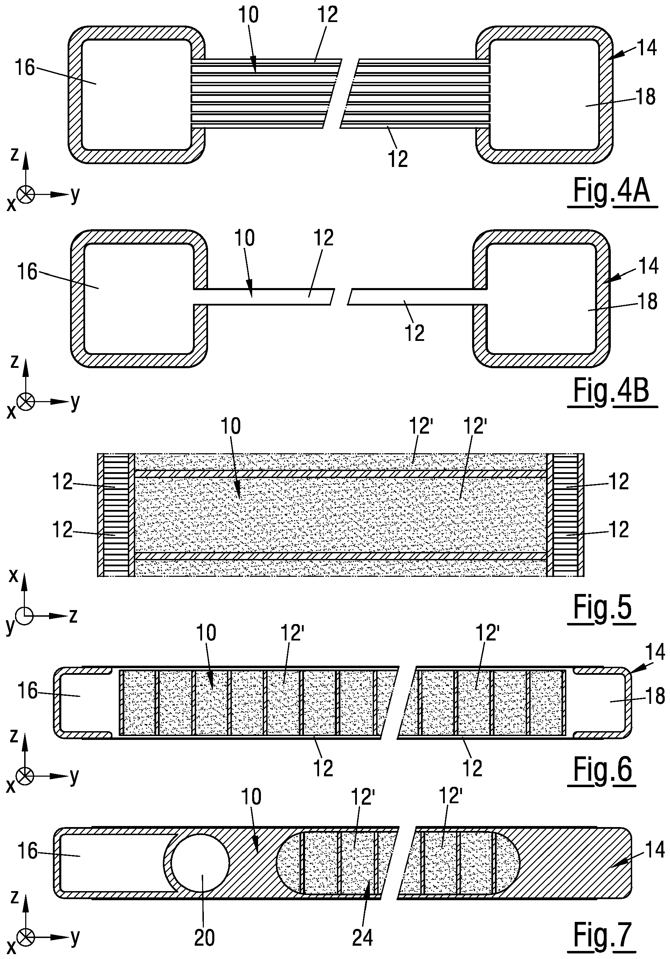

In den Figuren 4A und 4B ist jeweils eine Querschnittsfläche der Platte 10 senkrecht zur Richtung der Fluidströmungskanäle 12 gezeigt. Der Rahmen 14 weist beispielsweise eine Stärke von 2 cm und einen Innenquerschnitt von 16 x 16 mm auf. Eine Stärke des plattenförmigen Körpers der Platte 10 ist in Fig. 4B kleiner als in Fig. 4A. Das Wasser in dem Rahmen 14 versorgt die Fluidströmungskanäle 12. Dabei ist die Dimension des Innenquerschnitts des Rahmens 14 derart gewählt, dass das Wasser geräuschlos und mit geringem Strömungswiderstand fließt. Beispielsweise erreicht die Platte 10 bei einer Temperaturdifferenz von 2 °C des einströmenden Wassers gegenüber dem umgebenden Medium einen Volumenstrom von 172 l/h und einen Wärmeübertrag von 400 W bei einer mechanischen Pumpleistung von 0,028 W. Je kleiner der Durchmesser der Fluidströmungskanäle 12 gewählt wird, desto größer wird die Zahl der Fluidströmungskanäle 12 und desto besser die Wärmeübertragung. Die dünnere Platte in Fig. 4B weist Fluidströmungskanäle 12 auf, die insgesamt eine etwas größere innere Oberfläche und ein etwas größeren Strömungsquerschnitt aufweisen als die Fluidströmungskanäle 12 der Platte aus Fig. 4A. Hierdurch kann auch die Wärmeübertragung der Platte aus Fig. 4B höher sein als bei der Platte aus Fig. 4A.

Die Fluidströmungskanäle 12 können statt mit Wasser auch mit einem Luftgemisch bzw. mit Luft durchströmt werden. Die Maße der Luftkanäle sind ca. um einen Faktor 10 größer als die Maße der Wasserkanäle, da größere Volumenströme benötigt werden. Weiterhin kann die Platte 10, wie in den Figuren 5 bis 9B gezeigt, von zwei unterschiedlichen Fluiden, wie beispielsweise Wasser und Luft, durchströmt werden. Hierzu kann eine erste Vielzahl von Fluidströmungskanälen durch die Fluidströmungskanäle 12 bereitgestellt werden und beispielsweise von Wasser durchströmt werden, und eine zweite Vielzahl von Fluidströmungskanälen 12' von Luft durchströmt werden. Wie in Fig. 5 dargestellt, sind die einzelnen Luftkanäle 12' um ein Vielfaches größer als die einzelnen Wasserkanäle 12. Das Wasser und die Luft strömen dabei in einer Querrichtung Y der Platte 10. Die einzelnen Fluidströmungskanäle 12, 12' sind beispielsweise durch Metallbleche oder Folien voneinander getrennt. Die Platte 10 kann von einem Phasenwechselmaterial umgeben sein. Das Wasser kann dazu genutzt werden, das Phasenwechselmaterial mit Wärme zu Beladen, wobei über die Luftkanäle 12' Wärme wieder abgeführt werden kann.

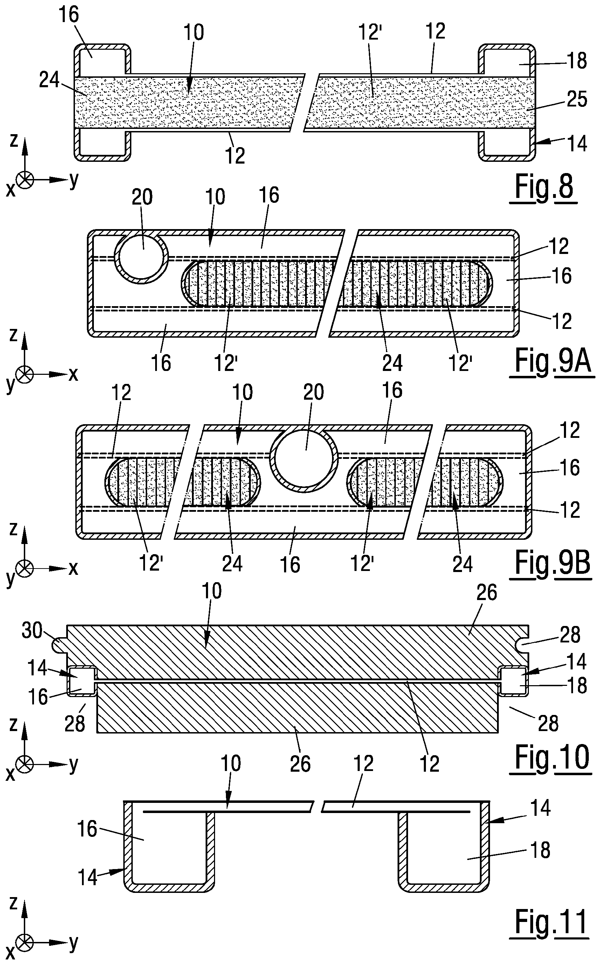

Alternativ strömt bei der in Fig. 6 und in Fig. 7 dargestellten Platte 10 das Wasser in der Querrichtung Y und die Luft in der Längsrichtung X. Die Platte 10 besteht beispielsweise vollständig aus Metall und der Rahmen 14 aus Kunststoff. In Fig. 7 ist der Wasserzufluss 20 zum Zuführen des Wassers in den Rahmen 14 dargestellt. Zum Zuführen der Luft kann der Rahmen 14 eine Lufteintrittsöffnung 24 aufweisen, wobei der Rahmen 14 in einem Teilbereich, welcher sich teilweise über eine Breite der Luftkanäle 12' erstreckt, offen ausgebildet ist. Zum Abführen der Luft kann der Rahmen 14 eine Luftaustrittsöffnung 25 aufweisen. In Fig. 8 ist eine weitere Alternative der Platte 10 dargestellt. Die Wasserkanäle 12 und die Luftkanäle 12' verlaufen beide in der Querrichtung Y der Platte 10. Der Zuflusskanal 16 und Abflusskanal 18 sind beide in zwei Stränge geteilt, die die Lufteintrittsöffnung 24 umschließen. In den Figuren 9A und 9B ist die Lufteintrittsöffnung 24 entlang der Längsrichtung X der Platte 10 dargestellt. Dabei kann die Platte 10 auch zwei Lufteintrittsöffnungen 24 aufweisen, wie in Fig. 9B dargestellt. Der Wasserzufluss 20 kann an einem Rand der Platte 10 wie in Fig. 9A oder auch mittig der Längsseite der Platte 10 wie in Fig. 9B positioniert sein.

Fig. 10 zeigt die Platte 10 aus Fig. 4B mit einem den plattenförmigen Körper und einen den Rahmen 14 umgebenden Speichermedium 26. Das Speichermedium 26 ist ein Phasenwechselmaterial, welches zumindest in zwei Schichten in Längsrichtung X und in Querrichtung Y der Platte 10 diese umgibt. Die Schichten des Speichermediums 26 und der plattenförmige Körper mit dem Rahmen 14 sind zu einer Platte 10 verbunden. An den Seitenkanten der Platte 10 sind Nuten 28 zur Aufnahme einer Tragestruktur ausgebildet. Weiterhin kann eine Seite der Platte 10 eine Feder 30 aufweisen, welche von einer gegenüberliegenden Nut 28 aufgenommen wird. Somit können mehrere Platten 10 puzzleartig aneinander angeordnet werden.

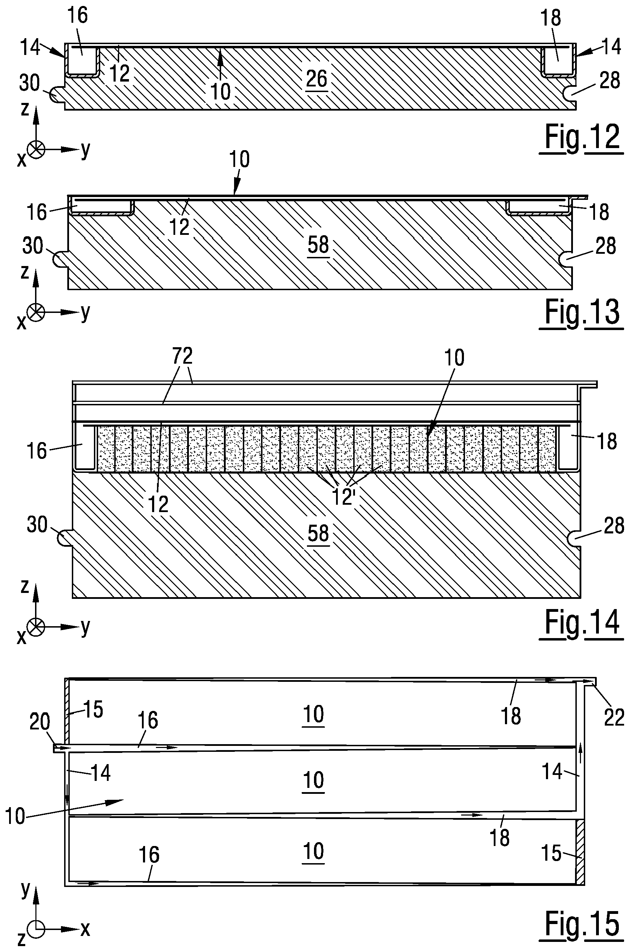

Fig. 11 zeigt in einer Querschnittsansicht eine weitere Ausführungsform der Platte aus Fig. 4B. Hierbei bilden der plattenförmige Körper und der Rahmen 14 zusammen eine ebene, flache Oberfläche. Beispielsweise ist die Oberfläche aus Metall. Eine derartige Platte 10 eignet sich insbesondere zur Ausbildung einer Dacheindeckung. Weiterhin kann eine derartige Platte 10 einen Träger für Photovoltaikzellen bilden, um diese beispielsweise zu kühlen. Dabei kann die Wärme von den Photovoltaikzellen über Versorgungskanäle 48 zu dem Phasenwechselmaterial der Platte 10 geführt werden. Umgekehrt kann beispielsweise im Sommer die Dacheindeckung zur Kühlung genutzt werden, indem nachts über die Außenfläche des Daches Wärme abgeführt wird, die tagsüber im Inneren des Gebäudes aufgenommen wurde. Die flache Platte 10 kann ähnlich wie die in Fig. 10 gezeigte Platte 10 ein Speichermedium 26 aufweisen. Hierzu zeigt Fig. 12 beispielsweise, dass lediglich eine Schicht des das Speichermediums 26 an einer Unterseite der Platte 10 angeordnet ist, sodass eine Oberseite der Platte 10 weiterhin die ebene, flache Oberfläche bildet. Eine obere Abdeckung der Platte 10 kann beispielsweise durch ein Metallblech oder durch eine Platte aus Glas oder Porzellan gebildet sein.

In Fig. 13 ist eine weitere Platte 10 mit einer flachen Oberfläche wie die Platte 10 aus Fig. 12 und mit einem Isoliermaterial bzw. mit einer Wärmeisolierung 58 gezeigt. Der Zuflusskanal 16 und der Abflusskanal 18 sind gegenüber der Platte 10 aus Fig. 12 flacher gestaltet, um eine möglichst gleichmäßige Dicke der Wärmeisolierung 58 zu erreichen. Eine Dicke der Platte 10 nimmt entlang ihrer Querrichtung Y etwas zu. Eine Abdeckung der Platte 10 ragt etwas über die Isolierung 58 hinaus. Damit wird eine Überlappung mit einer möglichen angrenzenden Platte 10 erreicht. Solche Platten können z.B. als Dacheindeckung oder für die Fassadengestaltung verwendet werden. Sie stellen einen effektiven Niedertemperatur-Solar-Absorber dar. Um auch bei kalten Außentemperaturen ein ausreichend hohes Temperaturniveau zu erreichen bzw. für die Nutzung als Hochtemperatur-Solar-Absorber kann eine selektive Beschichtung mit hoher Absorption von Sonnenlicht und niedriger Emission von Wärmestrahlung auf die Oberfläche aufgebracht werden. Eine zusätzliche Glasplatte oder eine Isolierverglasung können den Wärmeverlust durch Kontakt mit der Umgebungsluft reduzieren. Interessant für Dacheindeckungen ist auch, die Oberfläche mit Photozellen zu belegen oder als Träger für CIGS-Dünnschicht-Photovoltaik zu nutzen.

Fig. 14 zeigt die Platte 10 aus Fig. 6 mit Fluidströmungskanälen 12 für flüssige Fluide in Querrichtung Y und Fluidkanälen 12' für gasförmige Fluide in Längsrichtung X, allerdings mit Fluidströmungskanälen 12 nur an der Oberseite. Die Fluidströmungskanäle 12 sind durch eine Isolierverglasung 72 abgedeckt. Sollte kein Bedarf an erwärmtem flüssigen Fluid bestehen, dann kann die Platte vor Überhitzung geschützt werden, indem ein gasförmiges Fluid, z.B. die Umgebungsluft durch die Strömungskanäle 12' geleitet wird. Weiterhin umfasst die Platte 10 an ihrer Unterseite ein Isoliermaterial 58.

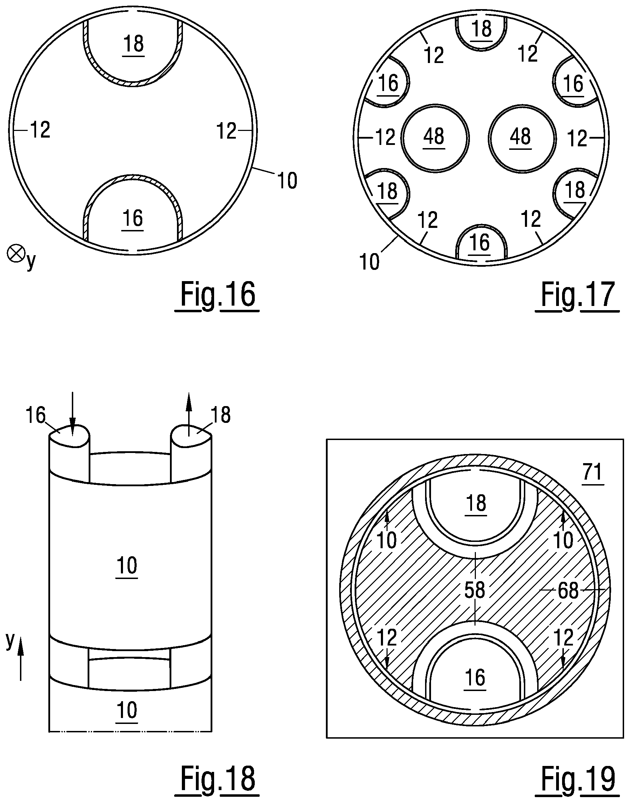

Um Platten 10 rationell zu verarbeiten, kann es sinnvoll sein, große Formate herzustellen. Um dennoch kurze Fluidströmungskanäle zu realisieren, sollten großformatige Platten 10 mehrere Zuflusskanäle 16 und/oder mehrere Abflusskanäle 18 aufweisen. Hierzu zeigt Fig. 15 eine großformatige Platte 10 mit zwei Zuflusskanälen 16 und mit zwei Abflusskanälen 18. Der Zufluss 20, der Abfluss 22 und das zum Abfluss 22 hin durchströmte Segment des Rahmens 14 der Platte 10 weisen wegen der höheren Volumenströme einen größeren Querschnitt auf. Insgesamt ist die Platte 10 durch die Abflusskanäle 18 und die Zuflusskanäle 16 in drei Segmente unterteilt. Die Fluidströmungskanäle 12 der drei Segmente werden beispielsweise alternierend in unterschiedlicher Richtung durchströmt. Das in Querrichtung Y obere und das untere Segment von unten nach oben, das mittlere Segment von oben nach unten. Der obere Zuflusskanal 16 und der untere Abflusskanal 18 sind jeweils oben und unten mit Fluidströmungskanälen 12 verbunden und haben wegen des doppelten Volumenstroms ebenfalls vergrößerte Querschnitte. Die Platte 10 weist sich verjüngende Zuflusskanäle 16 und sich erweiternde Abflusskanäle 18 auf. In den Fig. 16 bis 19 sind Platten 10 gezeigt, welche zylinderförmig sind. Wenn die Platten zu Zylindern geformt sind, dann können damit z.B. Bohrlöcher effektiv ausgefüllt werden oder sie werden in Pfähle für Pfahlgründungen integriert und es wird eine gute Wärmeübertragung zwischen einem strömenden Fluid und dem umgebenden Material erreicht. Fig. 16 zeigt in einer Querschnittsansicht eine zu einem Zylinder geformte bzw. gebogene Platte 10. Hier dargestellt sind lediglich zwei Kreissegmenten von jeweils 180° der Platte 10 mit Fluidströmungskanälen 12. Der Zuflusskanal 16 und der Abflusskanal 18 sind im Innern des Zylinders angeordnet und versorgen die beiden Kreissegmente mit Fluid. Das Fluid strömt aus dem Zuflusskanal 16 nach rechts und links in die Fluidströmungskanäle 12 und von dort nach oben in den Abflusskanal 18.

Fig. 17 zeigt in einer Querschnittsansicht eine zu einem Zylinder geformte Platte 10 mit sechs Segmenten in dessen Innern zwei Versorgungskanäle 48 angeordnet sind, die eine oder mehrere weitere Platten 10 mit Fluid versorgen. So können zwei zylinderförmige Platten 10 bzw. zwei Serien von zylinderförmigen Platten 10 in unterschiedlichen Betriebsmodi betrieben werden. Alle Anschlüsse sind an einem Ende der Platte 10 angeordnet.

Fig. 18 zeigt schematisch, wie die zylinderförmige Platte 10 in Serie mit einer weiteren zylinderförmigen Platte 10 verbunden werden kann. Statt einer sehr langen zylinderförmigen Platte werden mehrere zylinderförmige Platten 10 derart angeordnet, dass sie Zuflusskanäle 16 und Abflusskanäle 18 teilen. Bei einer Serie mit vielen Platten können große Druckunterschiede durch Reibungsverluste in den Zuflusskanäle 16 und Abflusskanälen 18 auftreten. Diese Druckunterschiede werden kompensiert, indem die Querschnitte der Fluidströmungskanäle 12 entlang der Querrichtung Y zunehmen. Alternativ oder ergänzend können die Zuflusskanäle 16 und die Abflusskanäle 18 entlang der Querrichtung Y der Platte 10 sich verjüngen. Weiterhin können die Zuflusskanäle 16 und Abflusskanäle 18 entsprechend große Querschnitte aufweisen, wenn sie auch die Funktion der Versorgungskanäle 48 übernehmen. Es ist möglich, dass bei entsprechenden Durchmessern des Zylinders die jeweilige Platte 10 vier Segmente mit je 90°, sechs Segmente mit je 60°, acht Segmente mit je 45°, usw. umfasst.

In Fig. 19 ist eine Verwendungsmöglichkeit der zylinderförmigen Platten 10 aus den Figuren 16 bis 18 für Erdsonden gezeigt. Hier wird beispielhaft in einer Querschnittsansicht eine Platte wie in Fig. 16 gezeigt, welche eine Verfüllung 68 aufweist. Die Verfüllung kann beispielsweise Stahlbeton aufweisen. Sowohl der Innenraum der Platten 10, insbesondere aber der Bereich zwischen Platte 10 und Mantelfläche eines Bohrlochs sollen hohlraumfrei verfüllt werden, damit ein guter thermischer Kontakt zwischen den Fluidströmungskanälen 12 und einem Untergrund 70 entsteht. Zwischen zwei übereinander liegenden zylinderförmigen Platten 10 bildet sich ein Spalt. Die Höhe der zylinderförmigen Platten 10, die Höhe des Zwischenspalts und der Abstand zwischen den Platten 10 und einer Außenwand des Bohrlochs werden derart gewählt, dass das Verfüllungsmaterial 68 einen gesamten Raum außerhalb der Zylinder füllt. Für den Bereich zwischen den Platten 10 und der Mantelfläche des Bohrlochs kann die Verfüllung 68 eine hohe Wärmeleitfähigkeit aufweisen. Ein Innenraum der Zylinder kann eine Verfüllung 68 mit einer niedrigen Wärmeleitfähigkeit aufweisen. Eine thermische Kopplung zwischen dem Zuflusskanal 16 und dem Abflusskanal 18 kann durch eine zusätzliche Wärmeisolierung 58 von dem Zuflusskanal 16 und dem Abflusskanal 18 gegen die innere Verfüllung 68 reduziert werden.

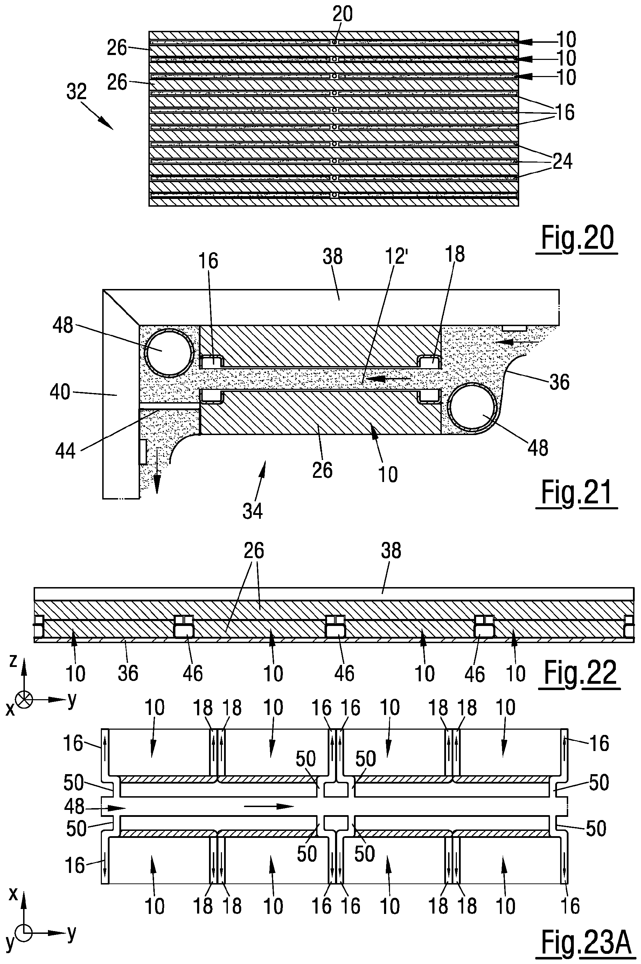

Die Figuren 20 bis 39 zeigen im Folgenden weitere Ausbildungsmöglichkeiten der Platte 10. So ist in Fig. 20 im Querschnitt eine thermische Batterie 32 gezeigt, welche aus einem Stapel von Platten 10 und aus zwischen den Platten 10 eingefügtes Speichermedium 26 gebildet ist. Beispielsweise sind die Platten 10 als die in Fig. 9B gezeigte Platte 10 ausgebildet. Es können aber auch Speicherblöcke mit unterschiedlichen Speichermedien 26 kombiniert werden, um beispielsweise einen Kühlblock mit einer niedrigeren Schmelztemperatur des Speichermediums 26 oder einen Heizblock mit einer höheren Schmelztemperatur des Speichermediums 26 zu bilden. Um den Heizblock zu beladen, können verschiedene Wärmequellen wie beispielsweise eine Wärmepumpe oder Solarthermie genutzt werden. Der Sommerblock kann durch kühles Wasser und/oder mit kühler Luft beladen werden. Die thermische Batterie 32 kann auch aus Platten 10 mit ausschließlich Luftkanälen 12' gebildet sein.

Fig. 21 zeigt im Querschnitt ein Deckenprofil 34, welches eine Platte 10 und ein Verkleidungsteil 36 umfasst. Das Deckenprofil 34 ist dazu ausgebildet, an einem Teilbereich einer Kante, welche zwischen einer Raumdecke 38 und einer Raumwand 40 ausgebildet wird, montiert zu werden. So kann ein die Raumdecke vollständig umlaufendes Deckenprofil 34 in dem Raum montiert werden. Die hier dargestellte Platte 10 ist wie die Platte 10 in Fig. 8, aber mit einem Speichermedium 26 ausgebildet. Das Verkleidungsteil 36 kaschiert die Platte 10 in Richtung des Rauminneren. Der Raum wird beispielsweise dadurch gekühlt, dass warme, unter der Raumdecke 38 stauende Luft durch die Luftkanäle 12' der Platte 10 geführt wird, hierdurch abkühlt und anschließend der Raumwand 40 entlang nach unten in das Rauminnere strömt. Zur gezielten Steuerung der Luft kann das Deckenprofil 34 weiterhin einen Ventilator 44 umfassen. Weiterhin sind Versorgungskanäle 48 zur Versorgung der Platte 10 mit beispielsweise einem flüssigen Fluid innerhalb des Deckenprofils 34 angeordnet. Das Deckenprofil 34 kühlt zusätzlich passiv durch Kontakt mit der Raumdecke 38, durch Absorption von Wärmestrahlung und durch Luftkontakt an der Oberfläche. Durch den Temperaturunterschied der Luft entsteht eine Konvektionsströmung im Raum, die kühle Luft an der Raumwand 40 entlang nach unten führt. Die Konvektionsströmung kann durch den Ventilator 44 verstärkt werden. Die Schmelztemperatur des Phasenwechselmaterials kann beispielsweise 23° betragen, um eine Raumtemperatur auf einer menschlichen Wohlfühltemperatur zu halten. Eine Drehzahl des Ventilators 44 kann erhöht werden, falls eine gemessene Raumtemperatur über der vorbestimmten Wohlfühltemperatur liegt, bzw. verringert werden, wenn die gemessene Raumtemperatur unter die Wohlfühltemperatur fällt.

Fig. 22 zeigt in einer Querschnittsansicht eine Anordnung von mehreren Abdeckplatten an der Raumdecke 38. Dabei sind die hier dargestellten vier Abdeckplatten jeweils wie die in Fig. 10 gezeigte Platte 10 ausgebildet. Die Abdeckplatten 10 werden unterhalb der Raumdecke 38 angeordnet und mit einer Trockenbau-Platte verkleidet, welche somit das Verkleidungsteil 36 bildet. Ein Wärmeaustausch kann passiv durch Wärmestrahlung und thermischen Kontakt mit der Raumdecke 38 sowie durch Kontakt mit der Raumluft erfolgen. Zur Kühlung können die Abdeckplatten 10 einen Konvektionsstrom erzeugen, weleher kühle Luft nach unten in den Raum strömen lässt. Unterhalb der sich in Längsrichtung X erstreckenden Rahmenseiten ist eine aus Metallprofilen 46 gebildete Tragestruktur zum Tragen der Abdeckplatten 10 gebildet. Die Metallprofile 46 können im Inneren mit dem Speichermedium 26 gefüllt sein.

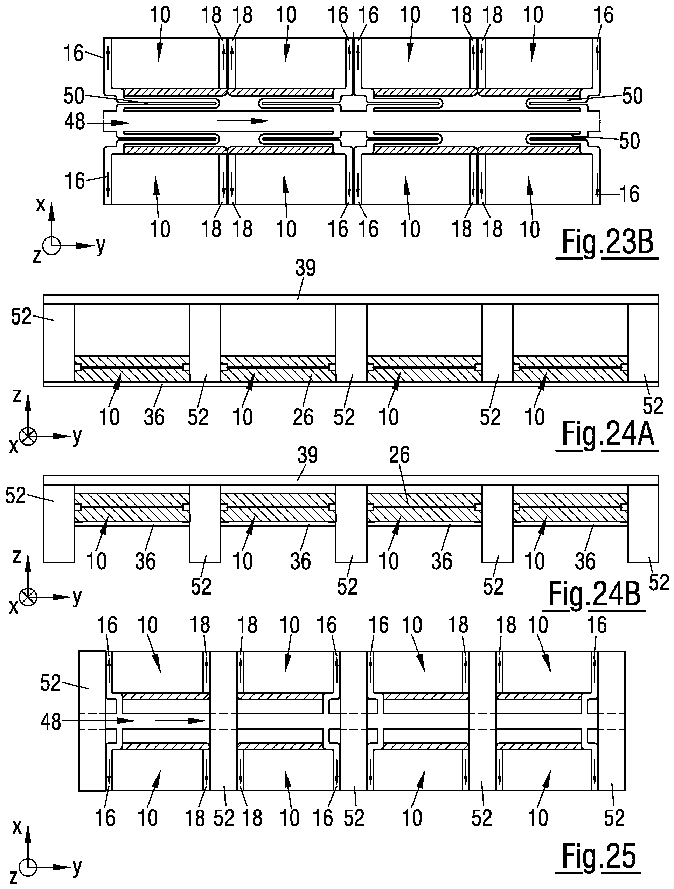

Fig. 23A und Fig. 23B zeigen jeweils in einem Querschnitt senkrecht zu der Tiefenrichtung Z die Abdeckplatten 10 aus Fig. 22 mit Wasserzuflusskanälen 16 und Wasserabflusskanälen 18, wobei die verschiedenen Wasserzuflusskanäle 16 der verschiedenen Abdeckplatten 10 von einem gemeinsamen Versorgungskanal 48 gespeist werden. Der Versorgungskanal 48 verläuft mit einem vorbestimmten Abstand zu einer Stirnseite der Abdeckplatten 10 zwischen zwei Reihen von Abdeckplatten 10. Die Abdeckplatten 10 sind derart angeordnet, dass die jeweiligen Zuflusskanäle 16 und die jeweiligen Abflusskanäle 18 benachbart sind. In Fig. 23B ist zudem gezeigt, wie Anschlusskanäle 50, die von dem Versorgungskanal 48 einem jeweiligen Zufluss 20 der Abdeckplatten 10 zur Versorgung der Platten 10 führen, bogenförmig bzw. U-förmig ausgebildet sind. Eine Länge eines jeweiligen Anschlusskanals 50 wird in Querrichtung Y der Platten 10 bzw. im Verlaufe des Versorgungskanals 48 immer kürzer.

In den Figuren 24A und 24B sind entsprechend der Fig. 22 die Platten 10 als Abdeckplatten ausgebildet, welche hier an einer Holzbalkendecke bzw. an einem Fußboden 39 eines oberen Geschosses zwischen den einzelnen Holzbalken oder Sparren 52 angeordnet sind. Dabei kann ein Abstand zwischen den Abdeckplatten 10 und dem Fußboden 39 variieren. Die Abdeckplatten 10 können einen Platz und eine Funktion einer Füllung übernehmen, welche üblicherweise bei Holzbalkendecken zu Brandschutzzwecken und zur Schalldämmung vorgesehen ist. Die in Fig. 24A gezeigte Anordnung der Platten 10 bildet eine geschlossene Holzbalkendecke, während die in Fig. 24B gezeigte Anordnung eine offene Holzbalkendecke bildet. Die Fig. 25 zeigt wie die Fig. 23A einen Querschnitt der Abdeckplatten 10, hier mit den Holzbalken 52. Die Holzbalken 52 sind zur Verlegung des Versorgungskanals 48 durchbohrt.

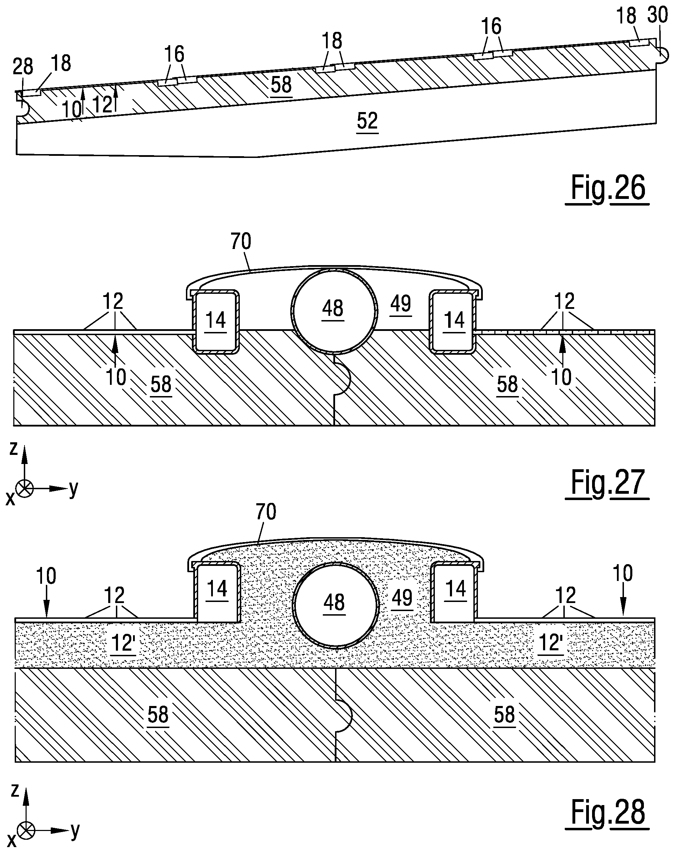

Eine den Figuren 24A und 24B ähnliche Anordnung der Platten 10 kann aber auch zur Gewinnung von Kälte oder Wärme auf der Dachfläche ausgebildet sein, wie beispielsweise in den Figuren 26 bis 28 gezeigt. Statt zwischen den Holzbalken 52 sind die Platten 10 als Eindeckung eines Daches montiert. Wie in Fig. 26 dargestellt sind die Platten 10 in Reihe nebeneinander oberhalb der Dachsparren 52 angeordnet. Hier sind beispielhaft vier Platten 10, wie sie in Fig. 13 beschrieben werden, dargestellt. Das Dach kann aber auch die weiteren beschriebenen Ausführungsformen der Platten 10 aufweisen. Zur Isolierung ist zwischen den Platten 10 und dem Dach ein Isoliermaterial als Wärmeisolierung 58, angeordnet.

Fig. 27 zeigt schematisch einen Querschnitt in einen Versorgungstunnel 49 einer Dacheindeckung, wobei der Versorgungstunnel 49 die Platten 10 mit dem Fluid, wie beispielsweise Luft oder Wasser, versorgt. Der Versorgungstunnel 49 umfasst den Versorgungskanal 48. Eine Abdeckung 70 des Versorgungstunnels 49 bildet mit den durchströmten Rahmen 14 der Platten 10 eine wetterfeste Verbindung, welche beispielsweise ähnlich wie eine Ziegeldeckung mit Nonne und Mönch ist. Die Platte 10 mit ihren Rahmen 14 bildet eine überbreite Nonne, die Abdeckung 70 des Versorgungskanals 48 den Mönch. Die Fluidströmungskanäle 12 der Platten 10 verlaufen beispielsweise entlang der Querrichtung Y der Platten 10. Unter den Platten befindet sich eine durchgängige Wärmeisolierung 58.

In Fig. 28 ist schematisch in einem Querschnitt ein Versorgungstunnel 49 einer Dacheindeckung für zwei verschiedene Fluide gezeigt, wie beispielsweise für Luft und Wasser. Der Versorgungstunnel 49 ist verglichen mit dem Versorgungstunnel 49 aus Fig. 27 höher. Dies ist einerseits wegen der Höhe der Fluidströmungskanäle 12' für das gasförmige Fluid, andererseits weil die durchströmten Rahmen 14 über den Fluidströmungskanälen 12' angeordnet sind. Die Fluidströmungskanäle 12' für das gasförmige Fluid verlaufen parallel zu den Zuflusskanälen 16 und zu den Abflusskanälen 18, d.h. in Längsrichtung X der Platten 10. Um einen ausreichend hohen Volumenstrom der Umgebungsluft durch die Fluidströmungskanäle 12' zu erzeugen, können Ventilatoren in die Abdeckung 70 der Versorgungstunnel 49 integriert werden (hier nicht dargestellt). Der Ventilator kann das gasförmige Fluid in die Umgebungsluft blasen und dadurch einen Unterdruck im Versorgungstunnel 49 erzeugen. Die Abdeckungen 70 der benachbarten Versorgungstunnel 49 können Einlassöffnungen für Umgebungsluft aufweisen, sodass die Versorgungstunnel 49 alternierend Umgebungsluft einsaugen und abgeben.

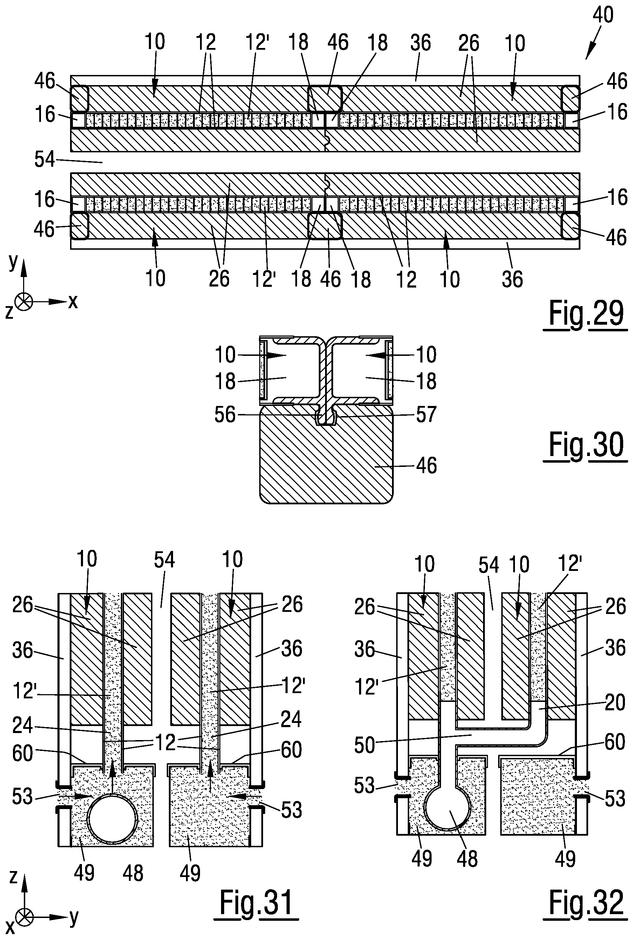

Die Figuren 29 bis 39 zeigen weitere Ausbildungsmöglichkeiten der Platten 10 als Wandelemente zum Auskleiden der Raumwand 40. Fig. 29 zeigt in einem horizontalen Schnitt die Raumwand 40. Hier ist die Raumwand 40 beispielhaft mit zwei gegenüberliegenden Reihen von zwei aneinander angeordneten Platten 10 ausgekleidet. Die Platten 10 entsprechen hier beispielsweise jeweils der Platte 10 aus Fig. 6. Die Raumwand 40 wird zu beiden Seiten mit Trockenbauplatten 36 verkleidet, welche mittels der jeweiligen Metallprofile 46 der Platten 10 an diesen befestigt sind. Die Fig. 30 zeigt einen vergrößerten Ausschnitt einer Verbindungsstelle zwischen zwei Platten 10 und einem Metallprofil 46. Die Platten 10 können eine Feder 56 aufweisen, welche in einer Nut 58 eines jeweiligen Metallprofils 46 einrastet.

Die zwei Reihen von Platten 10 sind mittels eines Luftspalts 54 oder mittels einer Schalldämmung voneinander beabstandet, das heißt die beiden Wandhälften sind akustisch entkoppelt. Weiterhin kann zwischen den zwei Reihen von Platten 10 eine akustische Dämmmatte zur Schallisolierung angeordnet sein. Die Raumwand 40 hat beispielsweise eine Stärke von 200 mm, wovon 120 mm für das Speichermedium 26, 34 mm für die Fluidströmungskanäle 12' (Luft), 4 mm für die Fluidströmungskanäle 12 (Wasser) und 16 mm für den Luftspalt 54 zwischen den beiden Reihen von Platten 10 vorgesehen sind.

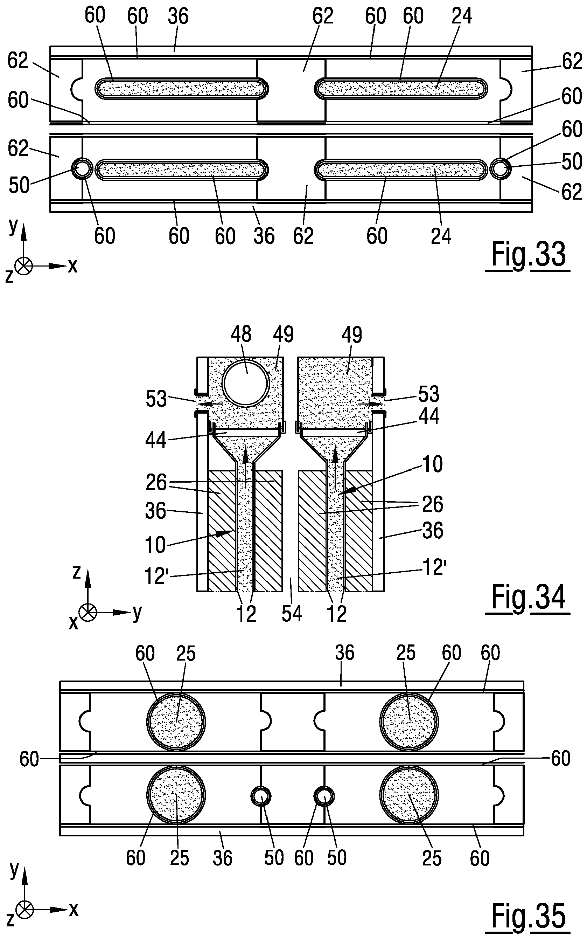

Die Raumwand 40 kann zusätzlich Wärme an den Raum abgeben, indem in einem in den Figuren 31 bis 33 dargestellten Sockelbereich der Raumwand 40 kühle Luft eingesaugt wird, die in einem in den Figuren 34 und 35 dargestellten Deckenbereich der Raumwand 40 erwärmt ausströmt. Die Erwärmung des Raumes kann durch Wärmestrahlung, Konvektion an der Oberfläche und/oder Temperierung der durchströmenden Luft erfolgen. Wie in den Figuren 31 bis 33 gezeigt, sind im Sockelbereich, das heißt in Bodennähe der Raumwand 40, Versorgungstunnel 49 verlegt, welche den Platten 10 beispielsweise Luft und/oder Wasser zuführen. Die jeweiligen Versorgungstunnel 49 sind beabstandet zu den Platten 10 zur akustischen Entkopplung angeordnet. Die Versorgungstunnel 49 weisen weiterhin eine Schicht mit einem Entkopplungsmaterial 60 auf, welches druckfest und/oder schallabsorbierend ist. Das Entkopplungsmaterial 60 kann die Versorgungstunnel 49 abdichten.

Luft kann im Sockelbereich der Raumwand 40 durch Lüftungsschlitze 53 in die Versorgungstunnel 49 einströmen und von dort durch die Fluideintrittsöffnungen 24 in die Luftkanäle 12' der Platten 10 geleitet werden, wie durch die Pfeile in Fig. 31 dargestellt. Wasser wird von dem Versorgungstunnel 49 mittels der Anschlusskanäle 50 zu einer oder mehreren Fluidströmungskanälen 12 der Platten 10 geführt, wie in Fig. 32 dargestellt. Fig. 33 zeigt einen Blick von oben auf die Versorgungstunnel 49 des Sockelbereichs. Die länglich dargestellten Lufteintrittsöffnungen 24 sind von dem Entkopplungsmaterial 60 umgeben, sowie die Anschlusskanäle 50 für Wasser. Weiterhin dargestellt sind in Fig. 33 Trägerfüße 62, welche die Metallprofile 46 der Platten 10 tragen.

Der in den Figuren 34 und 35 dargestellte Deckenbereich der Raumwand 40 ist das jeweilige Gegenstück zu dem in den Figuren 31 und 33 dargestellten Sockelbereich. Die Versorgungstunnel 49 sind hier zum Abführen des Wassers ausgelegt und sie lassen die Luft durch die Lüftungsschlitze 53 ausströmen. Weiterhin weisen die Versorgungstunnel 49 für Luft Ventilatoren 44 auf, welche den Luftstrom aufrechterhalten und regulieren. Die Figuren 31, 32 und 34 zeigen den Heizmodus. Im Kühlmodus kehren die Ventilatoren 44 die Strömungsrichtung der Luft um, sie strömt dann oben ein und unten aus.

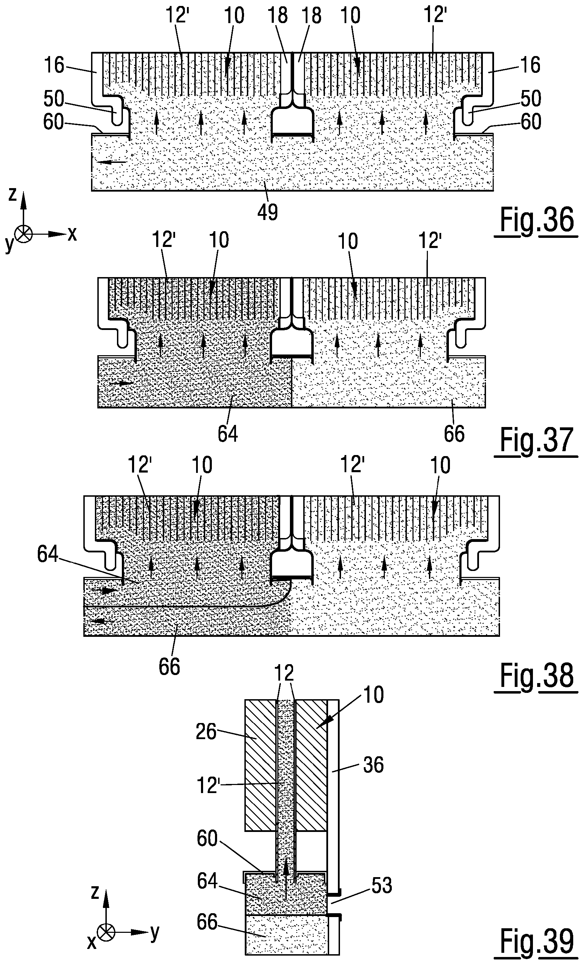

Ein jeweiliger Versorgungstunnel 49 kann für eine Abführung von Abluft ausgelegt sein. Soll die Raumwand 40 kühlen, so kann ein Versorgungstunnel 49 aus dem Deckenbereich zur Abführung der Abluft gewählt werden. Umgekehrt kann bei der Heizung durch die Raumwand 40 ein Versorgungstunnel 49 aus dem Sockelbereich zur Abführung der Abluft gewählt werden. In Fig. 36 ist beispielhaft ein derartiger Sockelbereich dargestellt. Die Abluft wird über den Versorgungstunnel 49 nach links abgeführt. Der jeweilige Versorgungstunnel 49 kann weiterhin in zwei Segmente unterteilt sein, wobei ein erstes Segment 64 für eine Zuführung von Frischluft ausgelegt ist. Ein zweites Segment 66 ist dann für eine Zirkulation von Umluft, wie beispielweise in Fig. 37 dargestellt, und/oder für die Abführung von Abluft, wie beispielweise in Fig. 38 dargestellt, ausgelegt. Das Frischluftsegment 64 kann auch zwei oder mehr Platten mit Frischluft versorgen, insbesondere wenn ein Frischluftbedarf hoch ist. Im unteren Versorgungstunnel des Frischluftsegments 64 ist der Lüftungsschlitz 53 abgedeckt, so dass die Frischluft nicht aus dem Sockelbereich in den Raum strömen kann, sondern durch die Fluidströmungskanäle 12' nach oben strömt.

Figur 39 zeigt einen Schnitt durch das linke Segment von Figur 38. Der Versorgungstunnel 49 ist aufgeteilt in einen oberen Bereich für Frischluft, verbunden mit dem ersten Segment 64, und einen unteren Teil für Abluft, der mit dem zweiten Segment 66 verbunden ist.

### Bezugszeichenliste

- 10: Platte
- 12: Fluidströmungskanal
- 12': Fluidströmungskanal
- 14: Rahmen
- 15: Rahmenabschnitt
- 16: Zuflusskanal
- 18: Abflusskanal
- 20: Zufluss
- 22: Abfluss
- 24: Fluideintrittsöffnung für gasförmige Fluide
- 25: Fluidaustrittsöffnung für gasförmige Fluide
- 26: Speichermedium
- 28: Nut
- 30: Feder
- 32: thermische Batterie
- 34: Deckenprofil
- 36: Verkleidungsteil
- 38: Raumdecke
- 39: Fußboden
- 40: Raumwand
- 44: Ventilator
- 46: Metallprofil
- 48: Versorgungskanal
- 49: Versorgungstunnel
- 50: Anschlusskanal
- 52: Holzbalken oder Dachsparren
- 53: Lüftungsschlitz
- 54: Luftspalt
- 56: Feder
- 57: Nut
- 58: Wärmeisolierung
- 60: Entkopplungsmaterial
- 62: Trägerfuß
- 64: erstes Segment
- 66: zweites Segment
- 68: Verfüllungsmaterial
- 70: Abdeckung
- 72: Isolierverglasung

- X: Längsrichtung
- Y: Querrichtung
- Z: Tiefenrichtung

## Patentansprüche

1. Platte (10) zur Abgabe und/oder Aufnahme von Wärme an ein oder von einem die Platte (10) umgebenden Medium und/oder zur Absorption und/oder Emission von elektromagnetischer Strahlung, aufweisend einen plattenförmigen Körper und einen sich entlang eines Umfangs des plattenförmigen Körpers erstreckenden Rahmen (14), wobei der plattenförmige Körper eine erste Vielzahl von einzelnen und voneinander beabstandeten Fluidströmungskanälen (12) aufweist, welche zusammen eine innere Fläche aufweisen, welche ein Vielfaches einer äußeren Gesamtfläche des plattenförmigen Körpers beträgt, wobei die Fluidströmungskanäle (12) sich zwischen zwei Rahmenabschnitten (15) des Rahmens (14) erstrecken, wobei zumindest die zwei Rahmenabschnitte (15) des Rahmens (14) hohl ausgebildet sind und jeweils zumindest bereichsweise einen Zuflusskanal (16) und/oder einen Abflusskanal (18) für ein die Fluidströmungskanäle (12) durchströmendes erstes Fluid bilden.

2. Platte (10) nach Anspruch 1,
wobei die Fluidströmungskanäle (12) sich in einer Querrichtung (Y) oder in einer Längsrichtung (X) des plattenförmigen Körpers zwischen zwei sich gegenüberliegenden Rahmenabschnitten (15) erstrecken, und/oder wobei die Fluidströmungskanäle (12) im Querschnitt rechteckig und/oder spaltförmig und/oder kreisförmig sind.

3. Platte (10) nach einem der vorstehenden Ansprüche,
wobei der Zuflusskanal (16) an einen Zufluss (20) zum Zuführen des ersten Fluids und/oder der Abflusskanal (18) an einen Abfluss (22) zum Abführen des ersten Fluids angeschlossen ist, wobei der Zufluss (20) und/oder der Abfluss (22) an einer Längsseite oder an einer Querseite des Rahmens (14) angeordnet sind.

4. Platte (10) nach einem der vorstehenden Ansprüche,
wobei der plattenförmige Körper zumindest eine Schicht mit einem Phasenwechselmaterial (26) aufweist, und wobei die Fluidströmungskanäle (12) in einem thermischen Kontakt mit dem Phasenwechselmaterial (26) sind,
und/oder
wobei die Platte (10) zumindest zwei parallel zueinander angeordnete Schichten mit dem Phasenwechselmaterial (26) umfasst, wobei sich die Fluidströmungskanäle (12) in einer Ebene zwischen den zumindest zwei Schichten erstrecken.

5. Platte (10) nach einem der vorstehenden Ansprüche,
wobei die einzelnen Fluidströmungskanäle (12) mittels eines wärmeleitenden Blechs, insbesondere eines Metallblechs, oder mittels einer wärmeleitenden Folie, insbesondere einer Metallfolie, voneinander beabstandet sind.

6. Platte (10) nach einem der vorstehenden Ansprüche,
wobei der plattenförmige Körper eine zweite Vielzahl von einzelnen und voneinander beabstandeten Fluidströmungskanälen (12') aufweist, welche dazu ausgelegt sind, von einem zweiten Fluid durchströmt zu werden, wobei die zweite Vielzahl von Fluidströmungskanälen (12') relativ zu der ersten Vielzahl von Fluidströmungskanälen (12) derart angeordnet ist, dass bei einem Durchströmen der Fluidströmungskanäle (12, 12') mit dem ersten Fluid und mit dem zweiten Fluid eine Strömungsrichtung des zweiten Fluids parallel oder senkrecht zu einer Strömungsrichtung des ersten Fluids ist,
wobei bevorzugt ein Fluid aus dem ersten und dem zweiten Fluid flüssig und ein weiteres Fluid aus dem ersten und dem zweiten Fluid gasförmig ist, wobei diejenigen Fluidströmungskanäle (12, 12'), die für ein Durchströmen durch das gasförmige Fluid ausgelegt sind, eine größere Querschnittsfläche aufweisen als diejenigen Fluidströmungskanäle (12, 12'), die für ein Durchströmen durch ein flüssiges Fluid ausgelegt sind.

7. Platte (10) nach einem der vorstehenden Ansprüche,
wobei die Fluidströmungskanäle (12) zur Kompensation von Reibungsverlusten und/oder Druckunterschieden in einem Querschnitt voneinander unterschiedliche Dimensionen aufweisen.

8. Platte (10) nach einem der vorstehenden Ansprüche,
wobei die Platte (10) zu einem zylinderförmigen Körper geformt ist, wobei die Platte (10) derart geformt ist, dass der zumindest eine Zuflusskanal (16) und der zumindest eine Abflusskanal (18) der Platte (10) in einem durch den zylinderförmigen Körper geformten Innenraum angeordnet sind,
wobei die Mehrzahl der Platten bevorzugt gemeinsam den zylinderförmigen Körper bilden und wobei die Mehrzahl der Platten (10) über zumindest einen gemeinsamen Zuflusskanal (16) und über zumindest einen gemeinsamen Abflusskanal (18) miteinander verbunden sind.

9. Thermische Batterie (32) umfassend einen Stapel von aneinander angeordneten Platten (10) nach einem der vorstehenden Ansprüche zum Bilden eines Heiz- und/oder Kühlblocks für eine Belüftungsanlage oder eines Pufferspeichers für Heiz- oder Kühlkreisläufe.

10. Gebäudeverkleidungselement, welches zumindest eine Platte (10) nach einem der Ansprüche 1 bis 8 aufweist, wobei die zumindest eine Platte (10) zumindest bereichsweise durch ein Verkleidungsteil (36) kaschiert sein kann, und wobei das Gebäudeverkleidungselement als eines der folgenden Gebäudeelemente ausgebildet ist:
- als ein Deckenprofil (34) zum Montieren an einem Teilbereich einer Kante, welche zwischen einer Decke (38) und einer Wand (40) ausgebildet ist;
- als eine Abdeckplatte zum Montieren an einer Decke (38);
- als ein Wandelement zum Bilden eines Teilbereichs einer Wand (40);
- als eine Bodenplatte;
- als ein Dachelement zum Bilden einer Dacheindeckung;
- als ein Fassadenelement einer Gebäudefassade; oder
- als ein Brüstungselement einer Balkonbrüstung.

11. Gebäudeverkleidungselement nach Anspruch 10,
wobei das Gebäudeverkleidungselement weiterhin zumindest einen Ventilator (44) aufweist, welcher dazu ausgelegt ist, eine Strömungsgeschwindigkeit des Fluids in einem Zufluss- oder Abflussbereich der zumindest einen Platte (10) zu erhöhen, wobei der Ventilator (44) weiterhin dazu ausgelegt ist, eine Drehzahl des Ventilators (44) in Abhängigkeit von einer Raumtemperatur zu regeln.

12. Gebäudeverkleidungselement nach Anspruch 10 oder 11,
wobei das Gebäudeverkleidungselement zumindest zwei Platten (10) nach einem der Ansprüche 1 bis 9 sowie einen gemeinsamen Versorgungstunnel (49) aufweist, welcher dazu ausgelegt ist, das zumindest eine Fluid zu den jeweiligen Zuflüssen (20) hin und/oder von den jeweiligen Abflüssen (22) weg und/oder zu den jeweiligen Fluideintrittsöffnungen (24) hin und/oder von den jeweiligen Fluidaustrittsöffnungen (25) weg über den gemeinsamen Versorgungstunnel (49) zuzuführen und/oder abzuführen, und wobei der gemeinsame Versorgungstunnel (49) mittels eines Entkopplungsmaterials (60) von den zumindest zwei Platten (10) beabstandet angeordnet sein kann.

13. Gebäudeverkleidungselement nach Anspruch 12,
wobei der gemeinsame Versorgungstunnel (49) von einem Luftgemisch durchströmt wird, wobei der gemeinsame Versorgungstunnel (49) weiterhin in zwei Segmente derart unterteilt ist, dass der einen Platte (10) der zumindest zwei Platten (10) Frischluft über das erste Segment (64) zugeführt wird, und dass von der zumindest einen weiteren Platte (10) der zumindest zwei Platten (10) Abluft über das zweite Segment (66) zumindest teilweise abgeführt wird.

14. Gebäudeverkleidungselement nach einem der Ansprüche 10 bis 13,
wobei das Gebäudeverkleidungselement auf einer Innenfläche eine Isolierungsschicht und/oder auf einer Außenfläche eine Anordnung von Photovoltaikzellen umfasst, wobei die zumindest eine Platte (10) dazu ausgelegt ist,
- die Photovoltaikzellen zu kühlen; und/oder
- Wärme von der Außenfläche aufzunehmen; und/oder
- Wärme über die Außenfläche an eine Umgebung abzugeben; und/oder
- zu einer Wärmeisolierung eines Gebäudes beizutragen.

15. Gebäudeverkleidungselement nach einem der Ansprüche 10 bis 13,
wobei das Gebäudeverkleidungselement auf einer Innenfläche eine Isolierungsschicht und/oder auf einer Außenfläche eine Beschichtung mit hohem Emissionsgrad und/oder auf einer Außenfläche eine selektive Beschichtung und/oder auf einer Außenfläche eine Verglasung oder Isolierverglasung umfasst, wobei die zumindest eine Platte (10) dazu ausgelegt ist,
- Wärme von der Außenfläche aufzunehmen; und/oder
- Wärme über die Außenfläche an eine Umgebung abzugeben; und/oder
- zu einer Wärmeisolierung eines Gebäudes beizutragen.
